# EUROPÄISCHE PATENTSCHRIFT

(11) **EP 3 205 922 B1**
(45) Veröffentlichungstag und Bekanntmachung des Hinweises auf die Patenterteilung: **08.01.2020**
(21) Anmeldenummer: 17152699.9
(22) Anmeldetag: 23.01.2017
(51) Int. Cl.: F16T 1/12, F16T 1/38, F16T 1/42

(54) **KONDENSATABLEITER UND VERFAHREN ZUM ABLEITEN VON KONDENSAT**
STEAM TRAP AND METHOD FOR TRAPPING STEAM
SÉPARATEUR DE CONDENSAT ET PROCÉDÉ DE SÉPARATION DE CONDENSAT

(30) Priorität: 21.01.2016 DE 102016200863
(43) Veröffentlichungstag der Anmeldung: 16.08.2017
(73) Patentinhaber: Gestra AG, 28215 Bremen (DE)
(72) Erfinder: Schröter, Holger, 28832 Achim (DE); Klattenhoff, Jürgen, 27749 Delmenhorst (DE)
(74) Vertreter: Eisenführ Speiser

(56) Entgegenhaltungen:
- DE-C- 665 150
- DE-C- 803 866
- DE-U1- 29 620 068
- FR-A- 1 171 741
- GB-A- 191 306 993
- US-A- 1 728 677
- US-A- 1 728 678
- US-A- 2 485 232
- US-A- 2 627 869
- US-A1- 2005 236 041

## Beschreibung

Die Erfindung betrifft einen Kondensatableiter nach dem Oberbegriff von Anspruch 1. Des Weiteren bezieht sich die Erfindung auch auf ein Verfahren zum Ableiten von Kondensat in einem Kondensatableiter.

Kondensatableiter sind Regelarmaturen, die eingesetzt werden, um in Dampferzeuger oder Dampfleitungen von Dampferzeugern oder bei Umformprozessen in dampfführenden Anlagen von zum Beispiel der chemischen und energetischen Industrie entstehendes Kondensat abzuleiten. Beispielsweise bei einer Inbetriebnahme einer dampfführenden Anlage bildet sich zu Beginn an den noch kühlen Leitungen, durch welche der heiße Dampf geleitet wird, eine relativ große Menge an Kondensat.

Während des Normalbetriebs solcher Dampfanlagen nimmt die Menge an entstehendem Kondensat ab. Jedoch entsteht auch weiterhin während des normalen Betriebszustandes solcher Anlagen, aufgrund der immer vorhandenen Wärmeverluste, was zu einer Absenkung der Dampftemperatur unterhalb der Sattdampf-Temperatur führen kann, fortwährend eine Mindestmenge an Kondensat. Das Abführen des entstehenden Kondensats ist jedoch notwendig, um Schäden durch Dampfschläge zu verhindern und um Kondensat vom Prozess fernzuhalten.

Es sind Kondensatableiter im Stand der Technik bekannt, wie beispielsweise Schwimmer-Kondensatableiter oder Bimetall- oder Membranableiter, die an bestimmten Punkten in den dampfführenden Anlagen montiert und in denen das Ansammlungen von Kondensat zu erwarten sind. Solche Kondensatableiter weisen ein Gehäuse mit einem Einlass zum Einleiten von Fluid, insbesondere des Kondensats, in das Innere des Gehäuses und einem Auslass zum Ableiten des Fluids, insbesondere des Kondensats aus dem Inneren des Gehäuses auf. Innerhalb des Gehäuses ist ein den Einlass und den Auslass trennendes Ventil vorgesehen, das in Abhängigkeit von bestimmten Bedingungen im Kondensatableiter einen Strömungsquerschnitt im Kondensatableiter freigibt oder verschließt.

Bei Schwimmer-Kondensatableitern erfolgt das Abführen des Kondensats in Abhängigkeit vom Füllstand des Kondensats im Gehäuse des Schwimmer-Ableiters. Übersteigt der Füllstand im Gehäuse ein vorbestimmtes Level oder Niveau, schwimmt eine im Gehäuse angeordnete Schwimmerkugel, die mit dem Ventil gekoppelt ist, auf, wodurch das Ventil betätigt und der Strömungsquerschnitt im Kondensatableiter geöffnet wird. Das Kondensat strömt dann in Richtung des Auslasses am Gehäuse ab. Fällt der Füllstand unter ein vorbestimmtes Mindestmaß, schließt das Ventil durch die sich absenkende Schwimmer-Kugel. Die Funktion des Schwimmer-Kondensatableiters ist dabei unabhängig von der Temperatur des Kondensats und möglichen Druckschwankungen in der Anlage.

US 2005/236041 A1 zeigt einen Schwimmer-Kondensatableiter, der ein Gehäuse mit einer Schwimmerkammer, einem Einlass und einem Auslass aufweist. Innerhalb der Schwimmerkammer ist ein Schwimmkörper am Ende eines beweglich angelenkten Hebels angeordnet. Am Hebel ist ein Ventilelement vorgesehen, das mit einem Ventilsitz abdichtend zusammenwirkt. Das Öffnen und Schließen des Ventils erfolgt in Abhängigkeit des Füllstandes des Kondensats in der Schwimmerkammer und dem sich dadurch anhebenden oder absenkenden Schwimmkörper.

Bei Bimetall- oder Membranableitern erfolgt die Steuerung in Abhängigkeit von der bzw. dem im Gehäuse des Kondensatableiters vorherrschenden Temperatur und Druck. Membranableiter verwenden Regelmembranen als Ventil, die mit einem temperatursensitiven Stellelement gekoppelt sind. Fallen Temperatur und Druck, aufgrund des sich im Kondensatableiter abkühlenden Kondensats unter einen vorbestimmten Grenzwert, öffnet die Regelmembran und das Kondensat kann vom Einlass des Kondensatableiters in Richtung des Auslasses fließen.

Die bekannten Schwimmer- und auch Bimetall- oder Membranableiter unterliegen dabei stets einem üblichen Verschleiß der bewegten und abdichtenden Bauteile, die eine regelmäßige Wartung und in vorbestimmten Zeitabständen eine Instandsetzung von zumindest den Ventilkörpern notwendig machen.

Der Erfindung liegt die Aufgabe zugrunde, einen Kondensatableiter zum Ableiten von Kondensat aufzuzeigen, der unempfindlicher gegenüber Verschleiß ist und damit eine verbesserte Langzeitfunktion gewährleistet werden kann. Zudem soll eine verbesserte Regelbarkeit und größere Volumenströme bei der Kondensatableitung bei einer kompakten Ausgestaltung des Kondensatableiters erreicht werden

Die Erfindung löst die ihr zugrunde liegende Aufgabe bei einem Kondensatableiter zum Ableiten von Kondensat mit den Merkmalen von Anspruch 1. Insbesondere ist die Antriebseinrichtung dazu eingerichtet, mittels des Druckes des Fluids im Kondensatableiter oder in einem mit dem Kondensatableiter in Verbindung stehenden Raum den zweiten Keramikkörper relativ zum ersten Keramikkörper zu bewegen, wobei mindestens eine Fluidleitung vorgesehen ist, über welche der Fluiddruck im Kondensatableiter oder Raum auf eine Druckfläche am zweiten Keramikkörper zum Bewegen des zweiten Keramikkörpers relativ zum ersten Keramikkörper geleitet wird.

Der Erfindung liegt die Erkenntnis zugrunde, dass mit dem Einsatz von zwei Keramikkörpern, die mittels einer Antriebseinrichtung relativ zueinander bewegbar sind, ein Ventil im Gehäuse des Kondensatableiters ausgebildet werden kann, welches vorzugsweise eine hohe Verschleißfestigkeit über eine lange Zeitdauer aufweist. Daher weist ein erfindungsgemäßer Kondensatableiter eine hohe Ausfallsicherheit auf. Zudem lassen sich die zur Ausbildung des Ventils verwendeten Keramikkörper reibungsarm zueinander bewegen. Damit ist die durch eine Antriebseinrichtung aufzubringende Verstellkraft für ein Verändern des Strömungsquerschnitts am Ventil und die damit verbundene Relativbewegung von erstem und zweitem Keramikkörper zueinander relativ gering. Durch die niedrigen aufzubringenden Antriebskräfte können vorzugsweise gering dimensionierte Antriebseinrichtungen verwendet werden, wodurch ein solch erfindungsgemäßer Kondensatableiter deutlich verringerte Abmessungen aufweist. Damit weist der Kondensatableiter insgesamt eine kompaktere Ausgestaltung im Vergleich zu den bekannten Kondensatableitern auf. Darüber hinaus wird eine verbesserte Regelbarkeit des Kondensatableiters bei der Kondensatableitung erreicht. Unter einem Fluid wird vorliegend insbesondere Wasser, Dampf oder ein Gemisch aus beiden in einem beliebigen Mengenverhältnis verstanden.

Nach einer bevorzugten Weiterbildung der Erfindung ist vorgesehen, dass einer der Keramikkörper, vorzugsweise der zweite Keramikkörper mittels mindestens einer Antriebseinrichtung gleitend zu dem anderen, vorzugsweise dem ersten Keramikkörper, bewegbar ist und vorzugsweise der erste Keramikkörper in dem Gehäuse lösbar befestigt ist. Bevorzugt sind der erste und zweite Keramikkörper so zueinander angeordnet, dass bei einer Verstellbewegung des bevorzugt zweiten Keramikkörpers, dieser auf dem ersten Keramikkörper abgleiten kann. Aufgrund des verwendeten Keramikwerkstoffes zur Ausbildung beider Ventilkörper gleitet der bewegliche zweite Keramikkörper reibungs- und verschleißarm auf oder entlang dem ersten feststehenden Keramikkörper. Unter einer gleitenden Bewegung ist vorliegend eine reine Schiebebewegung, auch als Translationsbewegung bezeichnet, sowie eine reine Drehbewegung, auch bezeichnet als Rotationsbewegung, des zweiten Keramikkörpers entlang des oder zum ersten Keramikkörper(s) zu verstehen.

Gemäß einer bevorzugten Ausführungsform stehen der erste und zweite Keramikkörper über einen Kontaktbereich miteinander in Anlage, wobei der erste und der zweite Keramikkörper vorzugsweise jeweils eine im Wesentlichen ebene Kontaktfläche aufweisen. Mit dem Vorsehen einer ebenen Kontaktfläche zwischen erstem und zweitem Keramikkörper ist in einer Ausführungsform ein reibungsarmer und zugleich sicher abdichtender Kontaktbereich an den Ventilkörpern erzeugt. Bevorzugt gleiten die ebenen Kontaktflächen von erstem und zweitem Keramikkörper bei einer Verstellbewegung und einer damit verbundenen Veränderung des Strömungsquerschnitts am Ventil direkt aufeinander. Eine andere Ausgestaltung der Erfindung sieht zylindrische Kontaktflächen an erstem und zweitem Keramikkörper vor. In einer möglichen Ausführungsform der Erfindung erfolgt die Führung des zweiten Keramikkörpers ausschließlich über die mindestens eine am zweiten Keramikkörper angreifende Antriebseinrichtung. Vorzugsweise genügt für eine sichere Abdichtung zwischen den Kontaktflächen der Ventilkörper bereits die auf den bevorzugt beweglichen zweiten Keramikkörper wirkende Druckkraft. Bevorzugt weisen die miteinander in Anlage stehenden Kontaktflächen von erstem und zweitem Keramikkörper bevorzugt reibungsarme bzw. reibungsverringernde Oberflächenstrukturen auf, welche ein vereinfachtes Aufeinanderabgleiten der Kontaktflächen bewirken.

In einer anderen Weiterbildung des erfindungsgemäßen Kondensatableiters ist eine Vorspanneinrichtung zum Aufbringen einer Anpresskraft zwischen dem ersten und dem zweiten Keramikkörper vorgesehen. Eine solche Vorspanneinrichtung kann optional zum Einsatz kommen. Diese wird aber immer zumindest dann eingesetzt, wenn die auf bevorzugt den zweiten beweglichen Keramikkörper einwirkende Druckkraft nicht ausreicht, um eine sicher abdichtende Anlage des zweiten Keramikkörpers auf dem oder zum ersten Keramikkörper zu gewährleisten. Die durch die Vorspanneinrichtung aufgebrachte Kraft ist dabei derart gewählt, dass für jeden am Kondensatableiter anliegenden Betriebszustand eine sichere Abdichtung bei geschlossenem Ventil ermöglicht ist. Unter bestimmten Umständen ist jedoch auch bei geschlossenem Ventil eine vorbestimmte Leckagemenge zulässig und auch tolerierbar.

Gemäß einer bevorzugten Ausführungsform der Erfindung weisen die Kontaktflächen von erstem und zweitem Keramikkörper unterschiedliche Rauheiten auf. Mit den unterschiedlichen Rauheiten an den Kontaktflächen der bevorzugt gesinterten Keramikkörper wird erreicht, dass die unmittelbare Kontakt- bzw. Stützfläche zwischen den miteinander in Anlage stehenden Keramikkörpern herabgesetzt ist. Durch die unterschiedlichen Rauheiten sind an den aufeinander abgleitenden Kontaktflächen mikroskopische Vertiefungen ausgebildet, die bevorzugt unterschiedlich groß sind. Vorzugsweise weist der Keramikkörper mit der geringeren Rauheit im Mittel kleinere Vertiefungen auf, als der Keramikkörper mit der größeren Rauheit.

Vorzugsweise ist zwischen den Kontaktflächen ein Flächentraganteil vorgesehen, der auf mindestens 75% oder mehr, vorzugsweise von etwa 75 bis 90%, eingestellt ist. Der eingestellte Flächentraganteil bezieht sich dabei auf den maximal möglichen Flächentraganteil zwischen den beiden aufeinander abgleitenden Keramikkörpern. Mit dem verringerten Flächentraganteil auf jedoch mindestens 75% können die Reibwerte zwischen den Kontaktflächen verringert werden, wobei weiterhin eine sichere Abdichtung zwischen den Kontaktflächen gewährleistet wird. Bevorzugt erfolgt die Einstellung des Flächentraganteils durch die Oberflächenbearbeitung der Kontaktflächen, was beispielsweise mithilfe des Prozesses des Schleifen und/oder Läppen und/oder Polierens erfolgen kann.

Bevorzugt weisen in einer Weiterbildung der Erfindung die Keramikkörper unterschiedliche Härten auf. Dies wird insbesondere durch die Wahl des Werkstoffs zur Ausbildung der Keramikkörper erreicht. Einer der Keramikkörper, beispielsweise der erste Keramikkörper, wird aus Siliziumkarbid und der andere, beispielsweise der zweite Keramikkörper aus Aluminiumoxid oder Aluminiumsilikat ausgebildet. Sofern zur Ausbildung beider Keramikkörper derselbe Werkstoff verwendet wird, werden die Eigenschaften des Werkstoffes für die verschiedenen Keramikkörper angepasst. Bevorzugt wird bei der Ausgestaltung der Keramikkörper mit unterschiedlichen Härten, in Verbindung mit verschiedenen Rauheiten der miteinander in Anlage stehenden Kontaktflächen der Keramikkörper, vorgeschlagen, an dem Keramikkörper mit der geringeren Härte eine größere Rauheit also eine weniger glatte Oberfläche auszubilden. Eine andere Weiterbildung der Erfindung sieht vor, dass die Kontaktflächen von erstem und/oder zweitem Keramikkörper eine Beschichtung aufweisen, vorzugsweise eine Diamantbeschichtung. Der Einsatz bzw. das Aufbringen einer Beschichtung, bevorzugt einer Diamantbeschichtung beispielsweise aus polykristallinem Diamant (PKD), ermöglicht eine vorteilhafte Verringerung der Reibwerte und damit einen verringerten Verschleiß an den Kontaktflächen der Keramikkörper während des Betriebsdauer des Kondensatableiters. Durch den verringerten Verschleiß ist eine erhöhte Betriebsdauer bzw. Langzeitfunktion des erfindungsgemäßen Kondensatableiters bewirkt.

Vorzugsweise weist die Vorspanneinrichtung ein elastisch verformbares Spannelement auf, wobei ein Abschnitt des Spannelements mit dem zweiten Keramikkörper und mindestens ein Abschnitt mit dem Gehäuse oder dem ersten Keramikkörper verbunden sind. Mit der Verwendung eines elastisch verformbaren Spannelementes ist ein einfaches Erzeugen bzw. Aufbringen einer Anpresskraft zwischen den Ventilkörpern, also erstem und zweitem Keramikkörper des Ventils, ermöglicht. In Abhängigkeit von der Art, beziehungsweise der Form des verwendeten Spannelements greift ein Abschnitt des Spannelements, beispielsweise ein Ende des Spanelements am zweiten, bevorzugt beweglichen Keramikkörper an. Mindestens ein weiterer Abschnitt, beispielsweise ein gegenüberliegendes Ende des Spannelements ist hingegen mit dem Gehäuse oder dem zweiten bevorzugt festen Keramikkörper des Ventils verbunden. Dabei ist das Spannelement insoweit verformt, dass es eine auf den zweiten Keramikkörper wirkende Zugkraft, Biegekraft oder Druckkraft ausübt.

Das Spannelement ist vorzugsweise als Zugfeder, Spiralfeder, Clip oder Klammer ausgebildet, wodurch eine konstruktiv einfache Ausgestaltung des Spannelementes erreicht ist. In Abhängigkeit von der Art des verwendeten Spannelements, ist das Spannelement mit dem bewegbaren zweiten Keramikkörper und entweder mit einem einlassseitigen Bereich oder einem auslassseitigen Bereich des Kondensatableiter-Gehäuses gekoppelt oder verbunden. Das Spannelement stützt sich beispielsweise an im Gehäuse ausgebildeten Vorsprüngen oder Auskragungen ab, welche in einer möglichen Ausführungsform gleichzeitig als Führung für den beweglichen Keramikkörper und zum Fixieren des ersten Keramikkörpers verwendet werden.

Gemäß einer bevorzugten Ausführungsform der Erfindung ist mindestens einer der Keramikkörper, sind vorzugsweise beide Keramikkörper im Wesentlichen scheibenförmig und relativ zueinander, bevorzugt aufeinander, verschiebbar ausgebildet. Erster und zweiter Keramikkörper sind bevorzugt als zylindrische Scheibenkörper ausgebildet, welche sich somit auf einfache Weise herstellen lassen. Bevorzugt gleiten die insbesondere kreisförmigen Kontaktflächen von erstem und zweitem Keramikkörper aufeinander ab. Die den insbesondere zweiten Keramikkörper bewegende Antriebseinrichtung greift an der zylindrischen Umfangsfläche oder an der ebenen Fläche des Scheibenkörpers an, welche von der Kontaktfläche des ersten Keramikkörpers abgewandt ist. Bevorzugt ist der erste scheibenförmige Keramikkörper mittels einer Überwurfmutter fest mit dem Kondensatableiter-Gehäuse verbunden. Der zweite scheibenförmige Keramikkörper ist beweglich zum ersten Keramikkörper im Gehäuse aufgenommen. Vorzugsweise weisen der erste und der zweite scheibenförmige Keramikkörper unterschiedliche Durchmesser auf. In einer bevorzugten Ausführungsform hat der zweite Keramikkörper einen geringeren Durchmesser als der erste Keramikkörper.

In einer alternativen Ausführungsform ist, anstelle der Ausgestaltung als Scheibenkörper, der erste Keramikkörper als Aufnahme- oder Hülsenteil und der zweite Keramikkörper als ein im Aufnahme- oder Hülsenteil translatorisch bewegbares oder drehbeweglich aufgenommenes Zapfenteil ausgebildet ist. Bevorzugt weist der zweite, bewegliche Keramikkörper an einem Ende des Zapfenteils einen radial vorstehenden Materialvorsprung auf. Über den bevorzugt umlaufend ausgebildeten Materialvorsprung liegt der als Zapfenteil ausgebildete zweite Keramikkörper an einer der Stirnseiten des als Hülsenteil ausgebildeten ersten Keramikkörpers auf. Über den Materialvorsprung wird eine axiale Lagesicherung des zweiten beweglichen Keramikkörpers erzielt. In einer alternativen Ausführungsform ist das Zapfenteil innerhalb eines Aufnahme- oder Hülsenteils translatorisch bewegbar aufgenommen. Das Verändern des am Kondensatableiter mittels der Keramikkörper ausgebildeten Ventils erfolgt durch Verschieben des Zapfenteils innerhalb des Aufnahmeteils in axialer Richtung. Das Aufnahmeteil bzw. Hülsenteil sowie das im Aufnahme- oder Hülsenteil bewegbare Zapfenteil können in einer Ausführungsform der Erfindung ein Querschnittsprofil mit einer polygonalen, bevorzugt rechteckigen Geometrie aufweisen.

Gemäß einer bevorzugten Weiterbildung des erfindungsgemäßen Kondensatableiters weist mindestens einer der Keramikkörper, vorzugsweise der erste Keramikkörper, einen Durchgang für das Fluid auf, wobei der andere, vorzugsweise der zweite bewegbare Keramikkörper mittels der Antriebseinrichtung so relativ zum Durchgang verschiebbar ist, dass der Strömungsquerschnitt für das Fluid bevorzugt stufenlos zwischen einer Geschlossen-Stellung und einer Offen-Stellung veränderbar ist. Bei einem scheibenförmig ausgebildeten Keramikkörper erstreckt sich der Durchgang bevorzugt zwischen den beiden parallel zueinander verlaufenden Hauptflächen im Wesentlichen senkrecht zu diesen. Die Abmessungen des Durchgangs, welche das Flächenmaß des freien Strömungsquerschnitts definieren, sind derart gewählt, dass der zweite Keramikkörper den Durchgang im ersten Keramikkörper in der Geschlossen-Stellung vollständig abdeckt. Gemäß einer alternativen Ausführung weisen erster und zweiter Keramikkörper einen Materialdurchgang auf, die zur Ausbildung eines Strömungsquerschnitts einander zumindest teilweise überdecken.

Vorzugsweise ist der Durchgang im ersten Keramikkörper als bevorzugt kreisförmiger Durchbruch ausgebildet. In einer möglichen Ausgestaltung der Erfindung ist der Durchgang exzentrisch in dem bevorzugt als kreisförmige Scheibe ausgebildeten ersten Keramikkörper angeordnet. Die Längsachse des Durchgangs ist versetzt bzw. in einem vorbestimmten Abstand zur Mittenachse des Scheibenkörpers angeordnet. Die Exzentrizität ermöglicht eine einfache Einstellung des freien Strömungsquerschnittes durch Rotation der starren Keramikscheibe während ihrer Montage und/oder bei Anlagenstillstand. Bei der alternativen Ausgestaltung von erstem und zweitem Keramikkörper als Hülsenteil und als in dem Hülsenteil drehbeweglich aufgenommenes Zapfenteil oder Wellenkörper, ist der Durchgang zur Ausbildung des freien Strömungsquerschnitts im ersten Keramikkörper vorzugsweise in der zylindrischen Mantelfläche des Hülsenteils angeordnet. In dem als Zapfenteil ausgebildeten zweiten Keramikkörper ist über einen Abschnitt in Längsrichtung des Zapfenteiles erstreckend eine Ausnehmung beziehungsweise ein planer Absatz angeordnet, der so zum Durchgang in der Mantelfläche des Hülsenteils ausrichtbar ist, dass ein freier Strömungsquerschnitt ausgebildet ist.

In einer alternativen Ausgestaltung der Erfindung mit einem einzigen Durchgang für das abzuleitende Fluid in nur einem der Keramikkörper weisen sowohl der erste als auch der zweite Keramikkörper jeweils einen Durchgang für das abzuleitende Fluid auf, wobei der zweite bewegliche Keramikkörper mit seinem Durchgang mittels der Antriebseinrichtung so zum Durchgang im ersten Keramikkörper verschiebbar ist, dass der Strömungsquerschnitt für das Fluid bevorzugt stufenlos zwischen der Geschlossenstellung und der Offenstellung einstellbar ist. Der bewegliche Keramikkörper ist mit seinem Durchgang, insbesondere durch eine Drehbewegung um seine Längsachse oder durch eine translatorische Bewegung in Richtung der Längsachse, zum Durchgang im ersten Keramikkörper ausrichtbar bzw. einstellbar. Die Durchgänge in den Keramikkörpern sind von einer Stellung, in der diese nicht miteinander fluchten und damit das Strömen des Fluids behindern, in eine Position bringbar, in der diese teilweise oder vollständig einander überdecken, sodass ein Ableiten des Fluids gewährleistet ist. Das Verstellen des zweiten Keramikkörpers innerhalb des ersten Keramikkörpers erfolgt bevorzugt mittels der Antriebseinrichtung am Kondensatableiter, was in einer Ausführung der Erfindung in Abhängigkeit von einer sich innerhalb des Kondensatableiter-Gehäuses ändernden physikalischen Größe oder erfassten Messgröße des Fluids erfolgt.

Bevorzugt ist mindestens einer der Keramikkörper mittels einer Führung relativ zu dem ersten Keramikkörper führbar, wobei bevorzugt erster und zweiter Keramikkörper mittels der Führung formschlüssig lösbar miteinander gekoppelt sind. Mithilfe der Führung ist eine Bewegung entlang einer vorgegebenen Bahn von insbesondere dem zweiten, beweglichen Keramikkörper zum ersten festen Keramikkörper bewirkt. Die Führung ist in einer Ausführungsform als Schiebeführung und in einer alternativen Ausführungsform als Drehführung ausgebildet. Bevorzugt weisen erster und zweiter Keramikkörper Körperabschnitte auf, die bevorzugt formschlüssig ineinandergreifen. Darüber ist dann eine Führung des zweiten Keramikkörpers zum ersten Keramikkörper in zumindest einer Ebene gewährleistet.

In einer möglichen Ausgestaltung der Erfindung weist die Führung miteinander in Eingriff stehende Führungselemente auf, welche als Ausnehmung oder Nut in einem Keramikkörper und als ein an dem anderen Keramikkörper korrespondierender Materialvorsprung ausgebildet sind. Mit der Ausgestaltung der Führungselemente als beispielsweise geradlinige Nut oder Ausnehmung, und als ein in Nut oder Ausnehmung gleitender Materialvorsprung, wird eine einfache Ausgestaltung einer Führung erreicht. In einer weiteren Ausführung weist der erste Keramikkörper eine kreisförmige Ausnehmung in seiner dem zweiten Keramikkörper zugewandten Kontaktfläche auf. Der erste Keramikkörper weist an seiner Kontaktfläche ein als Zapfen ausgebildeten Materialvorsprung an seiner Kontaktfläche auf, der korrespondierend in die kreisförmige Ausnehmung beziehungsweise Vertiefung des ersten Keramikkörpers eingreift. Mit Zapfen und kreisförmiger Ausnehmung ist bevorzugt eine Drehführung für die beiden Keramikkörper ausgebildet. In einer bevorzugten Ausführungsform der Erfindung weist der an der Kontaktfläche des zweiten Keramikkörpers abstehende Zapfen ein Längenmaß auf, das geringfügig größer ist als die Tiefe der Ausnehmung von der Kontaktfläche des ersten Keramikkörpers bis auf den Grund der Ausnehmung. Damit wird die Reibfläche der relativ zueinander beweglichen Keramikkörper reduziert, wodurch deutlich verringerte Stell- beziehungsweise Antriebskräfte für die insbesondere am zweiten Keramikkörper angreifende Antriebseinrichtung notwendig sind.

Gemäß der Erfindung ist die Antriebseinrichtung dazu eingerichtet, mittels des Drucks des Fluids im Kondensatableiter oder in einem mit dem Kondensatableiter in Verbindung stehenden Raum den zweiten Keramikkörper relativ zum ersten Keramikkörper zu bewegen, wobei vorzugsweise mindestens eine Fluidleitung vorgesehen ist, über welche der Fluiddruck im Kondensatableiter oder Raum auf eine Druckfläche am zweiten Keramikkörper zum Bewegen des zweiten Keramikkörpers relativ zum ersten Keramikkörper geleitet wird. Das Verstellen des zweiten Keramikkörpers erfolgt bevorzugt mittels eines am Kondensatableiter ausgebildeten Fluidantriebs, ohne die Notwendigkeit des Vorsehens eines separaten Antriebsmittels zum Verstellen des zweiten bewegbaren Keramikkörpers innerhalb des Kondensatableiter-Gehäuses. Über die Fluidleitung ist eine Verstellung des bewegbaren zweiten Keramikkörpers in eine Richtung bezogen auf den ersten Keramikkörper möglich. Mittels des Fluidantriebs kann das Öffnen oder das Schließen des mittels der Keramikkörper ausgebildeten Ventils erfolgen. Das Schließen bzw. Öffnen des Ventils kann vorzugsweise über einen am zweiten Keramikkörper in die entgegengesetzte Bewegungsrichtung wirkenden Rücksteller erfolgen, der aktiv wird, sobald der Druck durch das Schließen der Fluidleitung von der Druckfläche genommen wird. Der zweite Keramikkörper wird dann bevorzugt mittels des Rückstellers zurück in die Schließ- oder Offenstellung des Ventils bewegt. Die vorstehende Ausführungsform wird in einer Weiterbildung der Erfindung mit Ventilkörpern im Kondensatableiter verwirklicht, die aus einem zu einem Keramikwerkstoff abweichenden Material ausgebildet sind. Anstelle einer Keramik können auch metallische Werkstoffe verwendet werden

Gemäß einer bevorzugten Weiterbildung ist eine erste Fluidleitung mit dem Kondensatableiter oder dem Raum und mit einem auf einer Seite des zweiten bewegbaren Keramikkörpers angeordneten Druckraum fluidleitend verbindbar, und eine zweite Fluidleitung ist mit dem Kondensatableiter oder dem Raum und mit einem auf der anderen, gegenüberliegenden Seite des zweiten bewegbaren Keramikkörpers angeordneten Druckraum fluidleitend verbindbar, wobei die Druckverhältnisse in den Druckräumen zu beiden Seiten des zweiten Keramikkörpers über die Fluidleitungen einstellbar sind, sodass der zweite Keramikkörper vorzugsweise in zwei entgegengesetzte Richtungen bewegbar ist. Der bewegbare Keramikkörper ist aktiv in einander entgegengesetzte Richtungen bewegbar und kann somit gezielt betätigt werden und darüber die Arbeitsstellungen des Ventils am Kondensatableiter einstellen. Beide Fluidleitungen sind jeweils mit einem Ende mit dem Kondensatableiter oder mit dem mit dem Kondensatableiter in Verbindung stehenden Raum, wie beispielsweise einem mit dem Kondensatableiter fluidleitend verbundenen Dampferzeuger verbunden. Mit dem jeweils anderen Ende sind die Fluidleitungen mit auf einander gegenüberliegenden Seiten des Ventils angeordneten Druckräumen gekoppelt, wobei das zweite Ende einer jeweiligen Fluidleitung an nur einen Druckraum angeschlossen ist. Der zweite Keramikkörper wird über die individuell mit Druck beaufschlagbaren Fluidleitungen ähnlich einem doppelt wirkenden Zylinder betrieben.

In einer Ausführung der Erfindung ist dem beweglichen Ventilkörper ein Rücksteller, in Form eines Federelements, zugeordnet. Über den Rücksteller wird der Keramikkörper des Ventils bei Stillstand der Anlage bzw. während des Anfahrens der Anlage, wenn kein oder nur eine geringer Anlagendruck herrscht, mit dem das Ventil nicht gesteuert werden kann, in der Offenstellung gehalten. Darüber ist das Abführen von entstehendem Kondensat gewährleistet. Darüber hinaus ist der Rücksteller zum Halten des in Längsrichtung zum ersten Ventilkörper schiebebeweglichen, zweiten Ventilkörpers in seiner Ausrichtung zum ersten Ventilkörper eingerichtet. Dadurch wird das Verdrehen der Durchgänge im ersten und zweiten Ventilkörper zueinander vermieden.

Vorzugsweise ist in der ersten und/oder zweiten Fluidleitung jeweils ein mittels eines Stellantriebs betätigbares Steuerventil zum Freigeben oder Absperren der Fluidleitungen angeordnet. Mittels der Steuerventile in den Fluidleitungen lassen sich die Druckverhältnisse in den Druckräumen zu beiden Seiten des bewegbaren Keramikkörpers einfach einstellen. Ist die Verbindung eines jeweiligen Druckraumes auf einer Seite des zweiten Keramikkörpers zum Kondensatableiter abgesperrt, erfolgt über das Steuerventil bevorzugt eine Entlüftungsfunktion. Dadurch wird gewährleistet, dass beim Druckbeaufschlagen des gegenüberliegenden Druckraums der zu bewegende Keramikkörper nicht gegen ein Druckpolster im abgetrennten Druckraum bewegt werden muss. Die ansteuerbaren Stellantriebe, wobei vorzugsweise jeweils ein Stellmotor als Stellantrieb verwendet wird, betätigen die Steuerventile in Abhängigkeit von insbesondere einer innerhalb des Kondensatableiters gemessenen physikalischen Größe oder Messgröße, wie beispielsweise der Temperatur, dem Druck oder dem Füllstand. Dazu ist der Stellantrieb/sind die Stellantriebe mit einer Messsensorik zur Erfassung der Messgrößen im Kondensatableiter gekoppelt, welche den Stellantrieb oder die Stellantriebe bevorzugt direkt ansteuern.

In einer alternativen Ausgestaltung der Erfindung zu den Steuerventilen in den Fluidleitungen ist innerhalb des Kondensatableiters oder in dem mit dem Kondensatableiter verbundenen Raum ein Stellantrieb, insbesondere ein bewegbarer, vorzugsweise schwenkbarer Stellhebel mit einem daran angeordneten Ventilkörper, der ersten und zweiten Fluidleitung zugeordnet, welches dazu eingerichtet ist, wahlweise die Druckzufuhr in die eine der Fluidleitungen zuzulassen und in die andere der Fluidleitungen zu unterbinden. Über den Stellantrieb im Kondensatableiter ist entweder die erste Fluidleitung geöffnet und die zweite Fluidleitung geschlossen oder die zweite Fluidleitung geöffnet und die erste Fluidleitung versperrt. Während der Umschaltbewegung sind kurzzeitig beide Enden im Aufnahmeraum unverschlossen. Vorzugsweise ist der Stellantrieb ein innerhalb des Kondensatableiters oder des mit dem Kondensatableiter in Verbindung stehenden Raumes angeordneter, einseitig angelenkter schwenkbarer Stellhebel, der mit einem Ventilkörper ausgerüstet ist. Je nach Stellung des Stellhebels wird der Eingang der einen Fluidleitung versperrt oder der Eingang der anderen Fluidleitung versperrt. Je nachdem, zu welcher der Fluidleitungen die Druckzufuhr gewährleistet ist, öffnet das Ventil des Kondensatableiters oder es wird geschlossen.

Gemäß einer bevorzugten Weiterbildung des Kondensatableiters ist der Stellantrieb mittels eines in Abhängigkeit von einer sich innerhalb des Kondensatableitergehäuses oder dem Raum ändernden physikalischen Größe ansteuerbaren Stellglieds zwischen den entweder die erste oder die zweite der Fluidleitungen freigebenden Arbeitspositionen verstellbar, wobei das Stellglied vorzugsweise ein durch Temperatur und/oder Druck des sich im Kondensatableiter ansammelnden Fluids gesteuertes Dehnelement, Faltenbalg, elektrischer Antrieb, elektromechanischer Antrieb, pneumatischer Antrieb und/oder Bimetall-Antrieb aufweist. Das Bewegen des Stellantriebs mittels des Stellglieds erfolgt bevorzugt in Abhängigkeit der innerhalb des Kondensatableiters vorliegenden Umgebungsbedingungen. Bei einem temperaturgesteuerten Dehnelement oder Faltenbalgelement erfolgt das Verstellen des Stellantriebs nur aufgrund der Änderung der Temperatur innerhalb des Kondensatableiters ohne weitere Fremdeinwirkung bzw. Ansteuerung von außen. In einer alternativen Ausführungsform werden elektrische oder elektromechanische Antriebe als Stellglieder verwendet, die durch eine Messsensorik angesteuert werden, die bevorzugt fortwährend eine Auswertung der innerhalb des Kondensatableiters vorherrschenden Umgebungsbedingungen vornimmt. Die Messsensorik umfasst zumindest einen Temperatur- und/oder Drucksensor oder einen Füllstandssensor, mit denen die Bedingungen innerhalb des Kondensatableiters erfasst werden.

Vorzugsweise ist der erste Keramikkörper im Wesentlichen als zylindrisches Rohr und der zweite Keramikkörper als zylindrischer Kolben ausgebildet, und die Durchgänge für das abzuleitende Fluid verlaufen im Wesentlichen senkrecht zur Längsachse am ersten und zweiten Keramikkörper angeordnet. Mit der zylindrischen Ausgestaltung von erstem und zweitem Keramikkörper als Rohr und einem im Inneren des Rohres drehbeweglich oder in Längsrichtung des Rohres schiebebeweglich aufgenommenen Kolben ist eine präzise geführte Verstellbewegung von erstem und zweitem Keramikkörper zueinander möglich. In Abhängigkeit von der Bauform des zum Einsatz kommenden Kondensatableiters ist, aufgrund der Formgebung von erstem und zweitem Keramikkörper, eine individuelle Verstellung um die Längsachse oder parallel zur Längsachse des zweiten Keramikkörpers mittels einer als Fluidantrieb ausgebildeten Antriebseinrichtung oder ein Dehnelement angeordneten Antriebsmittels der Antriebseinrichtung gewährleistet. Die Durchgänge im ersten und zweiten Keramikkörper sind bevorzugt als zylindrische Bohrungen ausgeführt.

In einer weiteren Ausgestaltung des erfindungsgemäßen Kondensatableiters weist die Antriebseinrichtung mindestens ein, vorzugsweise zwei Antriebsmittel zum Bewegen eines der Keramikkörper auf, wobei ein Antriebsmittel oder beide Antriebsmittel dazu eingerichtet ist/sind, in Abhängigkeit von einer sich innerhalb des Kondensatableiter-Gehäuses ändernden physikalischen Größe oder erfassten Messgröße des Fluids den bevorzugt zweiten Keramikkörper zu bewegen. Zustandsgrößen oder Messgrößen des Fluids, welche sich beispielsweise innerhalb des Kondensatableiter-Gehäuses ändern, sind beispielsweise die Temperatur, der Druck oder der Füllstand des Kondensats. Auf Grundlage der sich im Gehäuse ändernden Zustandsbedingungen erfolgt eine Ansteuerung des zweiten Keramikkörpers durch mindestens eines der Antriebsmittel, mit dem der erste Keramikkörper zum zweiten Keramikkörper bewegt wird.

Vorzugsweise ist das mindestens eine Antriebsmittel als ein durch die Temperatur und den Druck des sich im Kondensatableiter ansammelnden Fluids (hier des Kondensats) gesteuertes Dehnelement, Faltenbalgelement, elektrischer Antrieb, elektromechanischer Antrieb, pneumatischer Antrieb und/oder Bimetall-Antrieb ausgebildet. Die Temperatur- und Druckänderung wird durch das Antriebsmittel selbst oder durch eine mit der Antriebseinrichtung steuerungstechnisch gekoppelte Messsensorik erfasst. Ein insbesondere als Dehnelement ausgebildetes Antriebsmittel umfasst bevorzugt einen metallischen Faltenbalg mit einer im Faltenbalg druckdicht aufgenommenen Fluidfüllung. Als Fluidfüllung wird insbesondere ein Gemisch aus Wasser und Propanol verwendet. In Abhängigkeit von der Temperatur des Kondensats, das bevorzugt das Dehnelement direkt umspült, verdampft oder verflüssigt sich das Propanol innerhalb des Faltenbalgs. Durch die Aggregatzustandsänderung des Gemisches verändert sich dessen Volumen, sodass der Faltbalg sich bevorzugt in Längsrichtung ausdehnt oder zusammenzieht. Darüber wird eine Verstellbewegung einer am Faltenbalg angeordneten Schubstange bewirkt, die mit dem zweiten Keramikkörper gekoppelt ist. Mit einem solchen Faltenbalg können Verstell- bzw. Hubwege von etwa 5 bis 7 mm erzielt werden. Alternativ werden elektrisch angesteuerte Antriebsmittel eingesetzt, wie ein Piezo-Motor oder dergleichen.

Gemäß einer Weiterbildung der Erfindung sind mindestens zwei Antriebsmittel zum Bewegen des vorzugsweise zweiten Keramikkörpers vorgesehen, wobei die Antriebsmittel in unterschiedlichen Wirkrichtungen an dem Keramikkörper angreifen, vorzugsweise in winkelig zueinander verlaufenden Wirkrichtungen, vorzugsweise mit einem Winkel im Bereich von etwa 70° bis etwa 110°. Mithilfe zweier am zweiten Keramikkörper angreifender Antriebsmittel ist ein bevorzugt vergrößerter Verstell- oder Bewegungsbereich des zweiten Keramikkörpers zum ersten Keramikkörper erzielt. Die bevorzugt temperaturgesteuerten Antriebsmittel sind im Wesentlichen in einem rechten Winkel zueinander ausgerichtet. Die Verwendung von zwei Antriebsmitteln, welche vorzugsweise über einen metallischen Ring als Kopplungsmittel am beweglichen zweiten Keramikkörper angreifen, hat zudem den Vorteil, dass für den beweglichen Keramikkörper keine separate Führung benötigt wird. Hier erfolgt die Führung des Keramikkörpers relativ zum ersten Keramickörper allein durch die bevorzugt als Dehnelement ausgebildeten bzw. ein Dehnelement aufweisenden Antriebsmittel. Bei einer alternativen Ausgestaltung des Antriebsmittels als elektromechanischer Antrieb erfolgt die Erfassung der Temperatur im oder benachbart zum Kondensatableiter über eine Messsensorik. In Abhängigkeit von voreingestellten Temperaturgrenzwerten erfolgt bei einem elektromechanischen Antrieb das gezielte Ansteuern des nur einen Antriebsmittels, welches ausreichend präzise ansteuerbar ist. Eine andere Weiterbildung des erfindungsgemäßen Kondensatableiters sieht vor, dass mindestens zwei Antriebsmittel vorgesehen sind, wobei das erste Antriebsmittel in einem ersten Temperaturbereich *ΔT* den Keramikkörper bewegt und das zweite Antriebsmittel in einem zweiten Temperaturbereich *ΔT* den Keramikkörper bewegt, wobei erster und zweiter Temperaturbereich unterschiedliche Abstände von der Siedelinie aufweisen. Bei Verwendung von insbesondere als Dehnelemente ausgebildeten Antriebsmitteln sind diese bevorzugt dazu eingerichtet, dass diese ein unterschiedliches Reaktionsverhalten der beiden Antriebsmittel in Abhängigkeit von der Temperatur im Kondensatableiter aufweisen. D.h., dass ein Antriebsmittel bei einer niedrigeren Temperatur beginnt zu arbeiten, als das zweite Antriebsmittel. Das unterschiedliche Reaktionsverhalten der beiden Antriebsmittel wird dadurch erreicht, dass die Dehnelemente ungleich gefüllt, bevorzugt unterschiedliche Zusammensetzungen des Wasser-Propanol-Gemisches im Faltenbalg des Dehnelements enthalten sind.

Gemäß einem weiteren bevorzugten Ausführungsbeispiel der Erfindung ist mindestens eine Temperaturmesseinrichtung zum Aufnehmen der Fluidtemperatur, bevorzugt gekoppelt mit einer Druckmesseinrichtung zur Ermittlung der Sattdampftemperatur, im Inneren des Gehäuses oder benachbart zu dem Gehäuse vorgesehen, wobei eine Signalauswertung der Temperaturmesseinrichtung direkt oder über eine Steuerungseinrichtung signalübertragend mit der Antriebseinrichtung gekoppelt ist. Insbesondere bei Verwendung eines elektromechanischen Antriebs wird eine Temperaturmesseinrichtung eingesetzt, welche die Temperatur des sich im Kondensatableiter ansammelnden Kondensats erfasst. Bei Unterschreiten einer vorbestimmten Temperaturgrenze (Abstand zur Sattdampftemperatur) beginnt das einzige Antriebsmittel den mit dem elektromechanischen Antrieb mechanisch gekoppelten zweiten Keramikkörper relativ zum ersten Keramikkörper zu bewegen. Darüber wird der Durchgang im ersten Keramikkörper freigegeben oder die Durchgänge in erstem und zweitem Keramikkörper überdecken zumindest teilweise einander, sodass das Kondensat aus dem Einlassbereich in den Auslassbereich des Gehäuses abfließt. In Abhängigkeit von der mittels der Temperaturmesseinrichtung gemessenen Temperatur wird entsprechend der freie Strömungsquerschnitt im Kondensatableiter angepasst, insbesondere vergrößert oder verkleinert. Beim elektromechanischen Antrieb kann der Strömungsquerschnitt bevorzugt durch die Software zum Steuern des Antriebsmittels (nahezu) beliebig eingestellt werden. In einer Ausführungsform der Erfindung ist neben einer Temperaturmesseinrichtung ein Füllstandssensor vorgesehen, mit dem der Füllstand im Kondensatableiter erfasst wird. Insbesondere bei Überschreiten eines zulässigen Füllstandsniveaus innerhalb des Kondensatableiters kann über den Füllstandssensor die Kondensatausschleusung initiiert werden. Bevorzugt wird dann der Durchgang in dem ersten Keramikkörper durch den nur einen elektromechanischen Antrieb vollständig und damit der maximal mögliche freie Strömungsquerschnitt als Durchlass für das angesammelte Kondensat freigegeben.

Vorzugsweise ist die Temperaturmesseinrichtung als Widerstandsthermometer oder Thermoelement ausgebildet. Mithilfe einer als Widerstandsthermometer oder Thermoelement ausgebildeten Temperaturmesseinrichtung, ist eine präzise Temperaturmessung auch in Medien bei wechselnden Drücken oder unter aggressiven Umgebungsbedingungen möglich.

Gemäß einer bevorzugten Weiterbildung der Erfindung ist eine elektrische Energieerzeugungseinrichtung zum Erzeugen von elektrischer Energie aus in dem Fluid enthaltener thermischer Energie vorgesehen, die vorzugsweise als Peltier-Element ausgebildet und zur Energieversorgung von dem einen Antriebsmittel und/oder einer Steuerungseinrichtung eingerichtet ist. Mithilfe der elektrischen Energieerzeugungseinrichtung ist, im Falle dass der Kondensatableiter mit Steuer-, Regel- und/oder Stelleinrichtungen ausgerüstet ist, die eine elektrische Energieversorgung benötigen, ein autarker Betrieb des erfindungsgemäßen Kondensatableiters möglich. Insbesondere bei der Verwendung eines elektromechanischen Antriebs, welcher einen Elektromotor oder einen Piezo-Motor zur Erzeugung einer Verstellbewegung für bevorzugt den zweiten Keramikkörper umfasst, ist eine kontinuierliche Energieversorgung zur Sicherstellung der Abfuhr des anfallenden Kondensats notwendig. Mithilfe eines Peltier-Elements ist eine Umwandlung der im Fluid enthaltenden thermischen Energie möglich, welche genügt, um den vergleichsweise geringen Energiebedarf von zumindest dem elektromechanischen Antrieb und einer damit gegebenenfalls gekoppelten Steuereinrichtung sicherzustellen.

Vorzugsweise ist der erste und/oder zweite Keramikkörper aus einem Material gebildet oder enthält ein Material, das ausgewählt ist aus der Gruppe bestehend aus Siliciumcarbid, Aluminiumoxyd und Zirkoniumoxyd. Mit dem Einsatz eines Keramikwerkstoffes unter Verwendung zumindest eines der oben stehend angeführten Werkstoffe, ist eine hohe Verschleißfestigkeit der zueinander beweglichen und die Ventilkörper ausbildenden Keramikkörper bewirkt. Zudem gleiten die Keramikkörper bevorzugt reibungsarm aufeinander ab, wodurch geringe Stellkräfte benötigt werden, um die Keramikkörper des Ventils zueinander zu bewegen. Die geringen Stellkräfte ermöglichen den Einsatz von entsprechend kleinen oder kompakten Antriebseinrichtungen für insbesondere den zweiten Keramikkörper. Die gewählten Werkstoffe bewirken ferner eine hohe Langlebigkeit des erfindungsgemäßen Kondensatableiters mit verringerten Wartungs- und Instandsetzungsintervallen.

Ein weiterer Aspekt der Erfindung betrifft ein Verfahren zum Ableiten eines Kondensats, mit den Schritten: Einleiten eines Fluids in einen Kondensatableiter, der ein Gehäuse, einen Einlass und einen Auslass und ein Ventil aufweist, Bewegen eines Keramikkörpers des Ventils relativ zu einem in Kontakt mit dem Keramikkörper stehenden, weiteren Keramikkörper des Ventils , sodass ein Strömungsquerschnitt für das Fluid verändert wird, im Falle des freien Strömungsquerschnitts, Ableiten des Fluids aus dem Gehäuse durch den Auslass, wobei die Bewegung des einen Keramikkörpers relativ zu dem weiteren Keramikkörper in Abhängigkeit von einer physikalischen Größe oder Messgröße des Fluids im Inneren des Gehäuses oder benachbart zu dem Gehäuse vorgenommen wird. Der Erfindung liegt die Erkenntnis zugrunde, dass mithilfe der erfindungsgemäßen Verfahrensschritte eine vorteilhaft sichere Kondensatableitung mit vergrößerten Zeitspannen zwischen möglichen Wartungsintervallen am Kondensatableiter möglich ist.

Bevorzugt erfolgt das Bewegen des einen Keramikkörpers in Abhängigkeit von der gemessenen Temperatur des im Gehäuse des Kondensatableiters befindlichen Kondensats, oder dem erfassten Füllstand des insbesondere sich im Einlassbereich des Kondensatableiters angesammelten Kondensats. Das sich im Kondensatableiter ansammelnde Kondensat kühlt dabei aufgrund von Wärmeverlusten allmählich ab. Wird beim Abkühlen des Kondensats eine vorbestimmte Grenztemperatur unterschritten, wird ein Keramikkörper, bevorzugt mittels einer in Abhängigkeit von der Temperatur gesteuerten Antriebseinrichtung relativ zu einem weiteren Keramikkörper des Ventils bewegt. Bei einem bevorzugt als Dehnelement ausgebildeten Antriebsmittel verflüssigt sich das Propanol-Wasser-Gemisch im Faltenbalg. Dadurch zieht sich der Faltenbalg zusammen, was die Bewegung des zweiten Keramikkörpers bewirkt In Abhängigkeit vom Maß der Relativbewegung beider Keramikkörper zueinander wird ein Strömungsquerschnitt des Ventils freigegeben, sodass das angesammelte Kondensat vom Einlassbereich des Kondensatableiters in den Auslassbereich des Kondensatableiters abfließen kann. Damit strömt dann wärmeres Kondensat in den Kondensatableiter nach. Weist das Kondensat eine Temperatur auf, die oberhalb der vorbestimmten Grenztemperatur liegt, wird der eine Keramikkörper über die temperatursensitive Antriebseinrichtung so bewegt, dass sich der freie Strömungsquerschnitt im Ventil verkleinert oder gar vollständig verschlossen wird. Damit wird gewährleistet, dass nicht unbeabsichtigter Weise statt ausschließlich Kondensat auch Dampfanteile über den Kondensatableiter abgegeben werden. In einer optionalen Ausgestaltung der Erfindung ist vorgesehen, dass die Bewegung des Keramikkörpers in Abhängigkeit vom gemessenen Füllstand des Kondensats im Kondensatableiter erfolgt. Das Bewegen des beweglichen Keramikkörpers und das damit verbundene Verändern des Strömungsquerschnitts des Ventils über den Füllstand erfolgt gemäß einer alternativen Ausgestaltung der Erfindung mittels eines elektromechanischen Antriebs, der zur Erfassung der physikalischen Größen und Messgrößen des Kondensats im Einlassbereich des Kondensatableiters mit Messsensoren, wie beispielsweise Temperatur- und/oder Füllstandssensoren, einer Messeinrichtung gekoppelt ist. Die erfassten Messwerte werden dann direkt oder über eine Steuereinrichtung an den elektromechanischen Antrieb übermittelt und in Abhängigkeit der Messwerte wird eine Relativbewegung beider Keramikkörper zueinander vorgenommen.

Gemäß einer bevorzugten Weiterbildung umfasst das Bewegen des einen Keramikkörpers zum anderen Keramikkörper ferner den Schritt: Abgleiten von ebenen Kontaktflächen der Keramikkörper aufeinander oder von zylindrischen Kontaktflächen der Keramikkörper ineinander. In Abhängigkeit von der Ausgestaltung der erfindungsgemäßen Keramikkörper gleiten bevorzugt ebene, miteinander in Kontakt und einander zugewandte Kontaktflächen der Keramikkörper aufeinander ab. In einer alternativen Ausgestaltung gleiten bevorzugt zylindrische Kontaktflächen ineinander ab, welche ebenfalls miteinander in Kontakt stehen und einander zugewandt sind. Gemäß bevorzugter Weiterbildungen des erfindungsgemäßen Verfahrens wird auf die oben stehenden Ausführungen zum erfindungsgemäßen Kondensatableiter und die darin beschriebenen Weiterbildungen verwiesen.

Nachfolgend wird die Erfindung anhand von Ausführungsbeispielen unter Bezugnahme auf die beigefügten Figuren näher beschrieben. Hierbei zeigen:
- Fig. 1:: eine Ansicht eines ersten Ausführungsbeispiels eines erfindungsgemäßen Kondensatableiters im Schnitt;
- Fig. 2:: eine Ansicht eines weiteren Ausführungsbeispiels eines erfindungsgemäßen Kondensatableiters im Schnitt;
- Fig. 3a - 3c:: Detailansichten eines Ausführungsbeispiels einer erfindungsgemäßen Antriebseinrichtung nach Fig. 1;
- Fig. 4a - 4c:: Detailansichten eines weiteren Ausführungsbeispiels einer erfindungsgemäßen Antriebseinrichtung;
- Fig. 5a - 5c:: Detailansichten eines dritten Ausführungsbeispiels einer erfindungsgemäßen Antriebseinrichtung;
- Fig. 6:: eine Schnittdarstellung eines dritten Ausführungsbeispiels eines erfindungsgemäßen Kondensatableiters;
- Fig.7:: eine Detailansicht eines Ausführungsbeispiels einer erfindungsgemäßen Antriebseinrichtung nach Fig. 6;
- Fig.8:: eine Ansicht eines anderen Ausführungsbeispiels eines erfindungsgemäßen Kondensatableiters im Schnitt;
- Fig. 9:: eine Detailansicht eines Ausführungsbeispiels eines beweglichen Keramikkörpers nach Fig. 8;
- Fig. 10:: eine Schnittdarstellung entlang der Linie A-A durch die Keramickörper nach Fig. 8;
- Fig. 11 und 12: eine Ansicht eines weiteren Ausführungsbeispiels eines erfindungsgemäßen Kondensatableiters im Schnitt in der Geschlossenund der Offenstellung;
- Fig. 13 und 14: eine Ansicht eines weiteren Ausführungsbeispiels eines erfindungsgemäßen Kondensatableiters im Schnitt in seiner Geschlossenstellung und seiner Offenstellung; und
- Fig. 15 und 16: eine Schnittdarstellung eines weiteren Ausführungsbeispiels in seiner Geschlossenstellung und seiner Offenstellung.

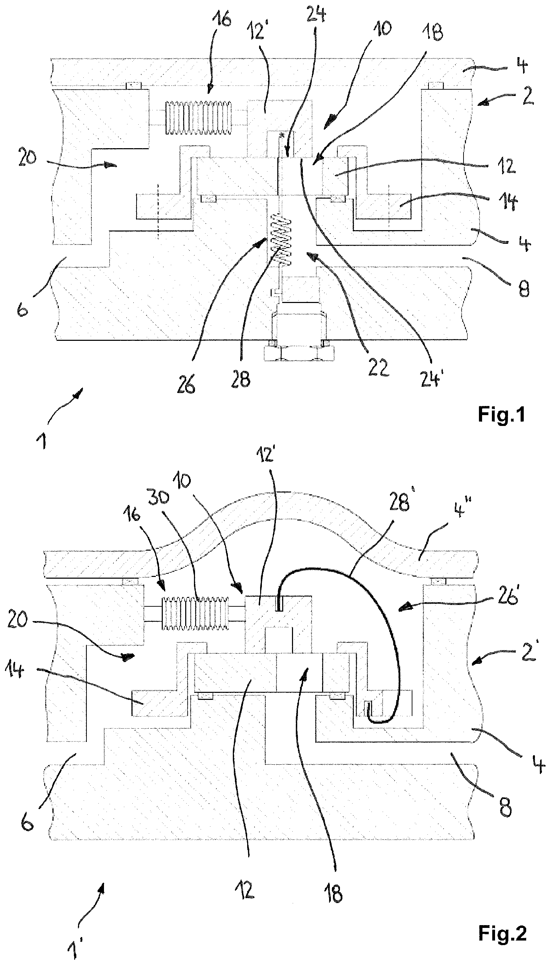

Fig. 1 zeigt einen Kondensatableiter 1 zum Ableiten von Kondensat aus einer dampfführenden Anlage. Der Kondensatableiter 1 weist ein Gehäuse 2 aus mindestens zwei Gehäuseteilen 4, 4' auf, welche, was nicht näher dargestellt ist, lösbar miteinander verbunden sind. Das Gehäuse 2 weist einen Einlass 6 zum Einleiten von einem Fluid, insbesondere Kondensat und/oder Dampf in das Gehäuseinnere und einen Auslass 8 zum Ableiten des Fluids, insbesondere Kondensats aus dem Gehäuseinneren auf. Im Inneren des Gehäuses 2 ist ein Ventil 10 mit zwei relativ beweglich zueinander angeordneten Keramikkörpern 12, 12' angeordnet. Ein erster Keramikkörper 12 ist fest mit dem Gehäuse 2 über einen Sicherungsring 14 verbunden. Der zweite Keramikkörper 12' ist in der gezeigten Ausführungsform oberhalb des ersten Keramikkörpers 12 beweglich aufgenommen. Der zweite Keramikkörper 12' ist mit einer Antriebseinrichtung 16 gekoppelt, die ein Antriebsmittel 30 aufweist.

Die Antriebseinrichtung 16 ist dazu eingerichtet, den zweiten Keramikkörper 12' in Abhängigkeit von physikalischen Größen oder Messgrößen des Fluids im Inneren des Gehäuses 2 den zweiten Keramikkörper 12' relativ zum ersten Keramikkörper 12 zu bewegen. Durch die Verstellbewegung des Keramikkörpers 12' wird ein Durchgang 18 im ersten Keramikkörper 12 zumindest teilweise freigegeben. Durch den freigegebenen Durchgang 18 ist ein freier Strömungsquerschnitt ausgebildet, über den das im Einlassbereich 20 des Gehäuses befindliche Kondensat in Richtung des Auslassbereiches des Gehäuses 2 abfließt.

Für eine nahezu sichere abdichtende Anlage einer Kontaktfläche 24 des ersten Keramikkörpers 12 mit einer Kontaktfläche 24' des beweglichen zweiten Keramikkörpers 12', ist eine Vorspanneinrichtung 26 zum Erzeugen einer Anpresskraft zwischen den Kontaktflächen 24, 24' von erstem und zweitem Keramikkörper 12, 12' vorgesehen. Die Vorspanneinrichtung 26 weist in der vorliegenden Ausführungsform ein als Zugfeder ausgebildetes Spannelement 28 auf, das eine Zugkraft auf den zweiten Keramikkörper 12' in Richtung des ersten Keramikkörpers 12 erzeugt. Das Spannelement 28 ist mit einem Ende mit dem zweiten Keramikkörper 12' und mit dem anderen Ende mit dem Gehäuse 2 verbunden und verursacht eine auf den zweiten Keramikkörper 12' wirkende Rückstellkraft zum Öffnen des Durchganges 18.

In Fig. 2 ist eine weitere Ausführungsform eines erfindungsgemäßen Kondensatableiters 1' abgebildet. Der Kondensatableiter 1' umfasst ein Gehäuse 2' mit den Gehäuseteilen 4, 4". Wie in der vorherigen Ausführungsform, weist das Gehäuse 2' einen Einlass 6 zum Einleiten des Kondensats und einen Auslass 8 zum Abführen des Kondensats in, beziehungsweise aus dem Gehäuse 2' auf. Das Ventil 10 mit seinen Keramikkörpern 12, 12' ist in nahezu identischer Form zu der in Fig. 1 gezeigten Ausführungsform ausgebildet. Das Ausführungsbeispiel der Fig. 2 weist eine Vorspanneinrichtung 26' mit einem Spannelement 28' auf, mittels der die Anpresskraft zwischen erstem und zweitem Keramikkörper erzeugt wird. Das Spannelement 28' ist als Klammer, Spange oder Clip ausgebildet und mit dem über die im Spannelement gespeicherten Biegekräfte wird der zweite Keramickörper 12' in Richtung des ersten Keramikkörpers 12 gedrückt, wobei ebenfalls eine Rückstellkraft zum vereinfachten Öffnen des Durchganges 18 wirkt.

Die Verstellbewegung des zweiten, beweglichen Keramikkörpers 12' zum Durchgang 18 des ersten Keramikkörpers 12 erfolgt wiederum über die Antriebseinrichtung 16 mit ihrem Antriebsmittel 30, das die Bewegung des zweiten Keramikkörpers 12' in Abhängigkeit von einer Zustandsgröße oder Messgröße des im Einlassbereichs 20 des Kondensatableiters 1' befindlichen Fluids regelt.

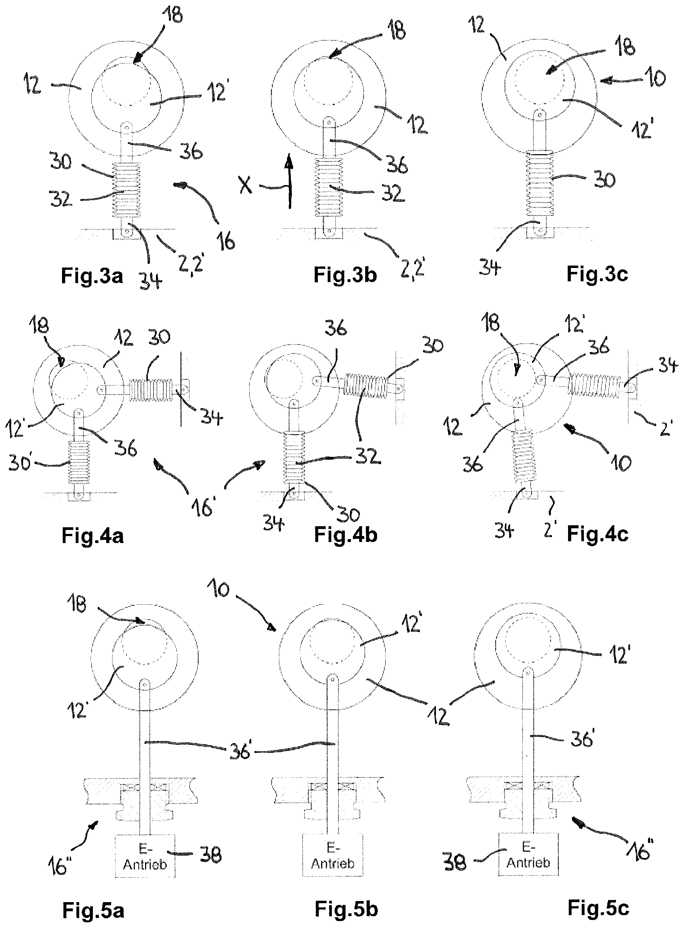

In den Figuren 3a bis 3c ist ein Ausführungsbeispiel einer wie in den Figuren 1 und 2 zum Einsatz kommenden erfindungsgemäßen Antriebseinrichtung 16 gezeigt. Die Antriebseinrichtung umfasst ein Antriebs- beziehungsweise Stellmittel 30 zum Bewegen des zweiten Keramikkörpers 12'. Das Antriebsmittel 30 ist als Dehnelement ausgebildet, das einen Faltenbalg 32 und ein Anschlussteil 34 für eine Kopplung des Antriebsmittels 30 mit dem Gehäuse 2, 2' sowie eine Schubstange 36 zum Verbinden des Antriebsmittels mit dem zweiten, beweglichen Keramikkörper 12' aufweist. Der Faltenbalg 32 ist mit einer Fluidfüllung druckdicht befüllt, insbesondere einem Gemisch aus Wasser und Propanol. Wie Fig. 3a verdeutlicht, befindet sich der bewegliche zweite Keramikkörper 12' in einer Position, wo der Durchgang 18 im ersten Keramikkörper 12 teilweise geöffnet ist. Somit kann in dieser Position Kondensat aus dem Einlassbereich 20 in den Auslassbereich 22 (Fig. 1, 2) abfließen.

Erhöht sich die Temperatur innerhalb des Kondensatableiters, durch Nachströmen heißeren Kondensats, verdampft ein Teil des im Faltenbalg enthaltenen Gemisches, sodass der Druck innerhalb des Faltenbalgs 32 ansteigt und es zu einer Ausdehnung in Längsrichtung (Pfeil X) des Antriebsmittels 30 kommt. Die Ausdehnung des Faltenbalgs 32 wird über die Schubstange 36 auf den zweite Keramikkörper 12' übertragen, so dass dieser sich bewegt. Damit deckt der zweite Keramikkörper 12' den Durchgang 18 weiter ab, wodurch sich der freie Strömungsquerschnitt für den Durchtritt des Kondensats verringert, wie in Fig. 3b dargestellt.

In Fig. 3c ist der Betriebszustand des Kondensatableiters dargestellt, in dem das Ventil 10 vollständig geschlossen ist. Der Durchgang 18 im ersten Keramikkörper 12 ist dabei vollständig durch den zweiten Keramikkörper 12' abgedeckt. In der gezeigten Ausführungsform sind die Keramikkörper 12, 12' jeweils als zylindrische Scheibenkörper ausgebildet. Die Schubstange 36 ist vorliegend mit einem zylindrischen Wandabschnitt des zweiten Keramikkörpers 12' verbunden. Das Antriebsmittel 30 ist in Fig. 3c, aufgrund der hohen Temperaturen im Kondensatableiter nahezu vollständig ausgefahren. Mit einem derartigen Dehnelement können Hubwege von etwa 5 bis 7 mm erzeugt werden. In einer nicht näher dargestellten Ausführungsform wird der zweite Keramikkörper 12' relativ zum ersten Keramikkörper 12 geführt, was mittels der Antriebseinrichtung 16 allein oder alternativ über zu beiden Seiten des Verstellweges angeordnete und die Verstellbewegung quer zur Längsrichtung X und damit seitlich begrenzende Führungsteile vorgenommen werden kann.

In den Figuren 4a bis 4c ist ein anderes Ausführungsbeispiel einer erfindungsgemäßen Antriebseinrichtung 16' abgebildet, welche zwei den zweiten, beweglichen Keramikkörper 12' bewegende Antriebsmittel 30, 30' umfasst. Die Antriebsmittel 30, 30', welche in der gezeigten Ausführungsform als Dehnelement ausgebildet sind, weisen jeweils einen Faltenbalg 32, ein Anschlussteil 34 und eine Schubstange 36 zur Kopplung mit dem zweiten Keramikkörper 12' auf. Der Unterschied zwischen beiden Antriebsmitteln 30, 30' besteht im Ausführungsbeispiel in der unterschiedlichen Fluidfüllung; diese können aber auch gleich ausgebildet sein.. Die Fluidfüllungen weisen bevorzugt unterschiedliche Zusammensetzungen aus Wasser und Propanol auf. Damit erfolgt eine Verstellbewegung der Antriebsmittel bei unterschiedlichen Temperaturen, wie nachstehend erläutert.

Fig. 4a zeigt das Ventil 10 im teilweise geöffneten Zustand, wobei beide Antriebsmittel 30, 30' eingefahren sind. Fig. 4b gibt den Betriebszustand mit erhöhter Temperatur innerhalb des Kondensatableiters wider, wobei die Figur verdeutlicht, dass sich bereits der Faltenbalg 32 des Antriebsmittels 30' ausgedehnt hat, wohingegen der Faltenbalg 32 des Antriebsmittels 30 seine ursprüngliche Ausdehnung beibehalten hat. Fig. 4c zeigt das Ventil 10 in geschlossener Stellung, wobei nun beide Antriebsmittel 30, 30' nahezu vollständig ausgefahren sind. Die Führung des beweglichen Keramikkörpers 12' wird in der gezeigten Ausführungsform ausschließlich über die beiden Antriebsmittel 30, 30' der Antriebseinrichtung 16' gewährleistet. Die Antriebsmittel 30, 30' sind mit ihren Anschlussteilen 34 schwenkbar am Gehäuse 2' und mit ihren Schubstangen 36 beweglich am zweiten Keramikkörper 12' angeordnet.

Die Figuren 5a bis 5c zeigen die Verwendung einer Antriebseinrichtung 16" mit einem elektromechanischen Antrieb 38, wie beispielsweise einem Piezo-Motor. Der elektromechanische Antrieb 38 ist über eine Schubstange 36' mit dem zweiten Keramikkörper 12' für eine Verstellbewegung desselbigen relativ zum ersten Keramikkörper12 verbunden. Die Schubstange 36' ist abdichtend geführt, um den elektromechanischen Antrieb 38 sicher gegenüber das im Inneren des Kondensatableiters befindliche Kondensat abzuschirmen. Das Bewegen des zweiten Keramikkörpers 12 erfolgt auf Grundlage der mittels einer nicht näher dargestellten Messeinrichtung erfassten physikalischen Zustandsgrößen und Messgrößen, wie Temperatur und Füllstand, des Kondensats innerhalb des Gehäuses des Kondensatableiters oder benachbart zu diesem. Die Messeinrichtung weist dazu Messsensoren auf, welche die Messwerte des Fluids aufnehmen. Die Messeinrichtung übermittelt die Messwerte in Form von Signalen direkt oder über eine Steuereinrichtung an den elektromechanischen Antrieb. Fig. 5a zeigt den teilweise geöffneten, Fig. 5b zeigt den fasst geschlossenen und Fig. 5c zeigt den vollständig geschlossenen Zustand des Ventils 10.

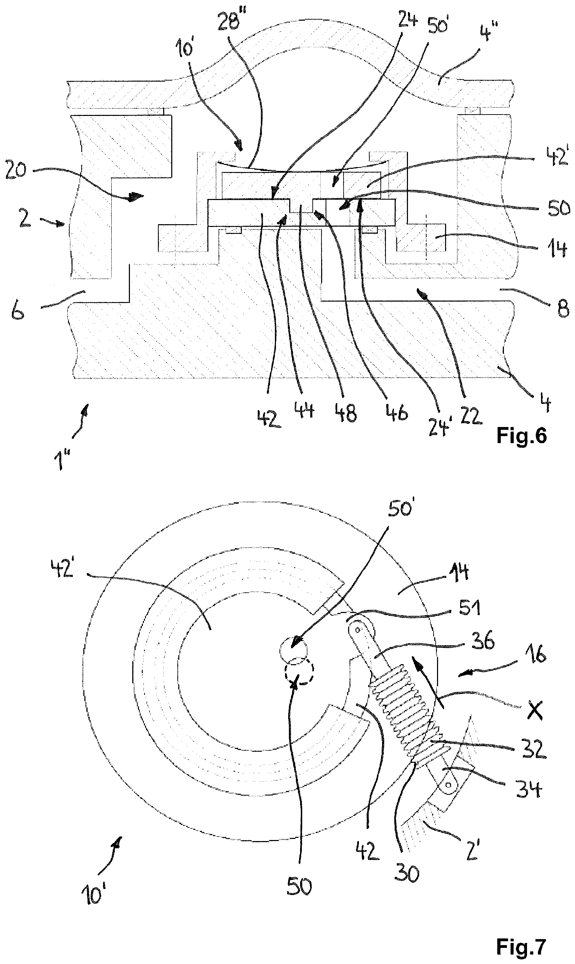

In Fig. 6 ist ein weiteres Ausführungsbeispiel eines erfindungsgemäßen Kondensatableiters 1" dargestellt. Der Kondensatableiter 1" weist ein Gehäuse 2' mit Gehäuseteilen 4, 4" auf, die druckdicht miteinander verbunden sind. Das Gehäuse weist einen Einlass 6, einen Auslass 8 und im Inneren des Gehäuses ein Ventil 10' auf. Das Ventil 10' umfasst einen ersten Keramikkörper 42 und einen zweiten, beweglich aufgenommenen Keramikkörper 42'. Die Keramikkörper 42, 42' sind als zylindrische Scheibenkörper ausgebildet. Der erste Keramikkörper 42 ist fest im Inneren des Gehäuses über einen Klemm- beziehungsweise Sicherungsring 14 befestigt. Der zweite Keramikkörper 42' ist über eine Drehführung 44 am ersten Keramikkörper 42 aufgenommen. Die Drehführung 44 ist mittels einer an der Kontaktfläche 24 des Keramikkörpers 42 ausgebildete kreisförmige Vertiefung 46 und eines mit der Vertiefung 46 korrespondierenden Drehzapfen 48 ausgebildet. Der Drehzapfen 48 ist ein an der Kontaktfläche 24' des zweiten Keramikkörpers 42' im Mittenbereich des zweiten Keramikkörpers 42' vorstehender Materialvorsprung. Vertiefung und Drehzapfen sind jeweils zentrisch zu den Mittenbereichen der scheibenförmigen Keramikkörper 42, 42' angeordnet.

Die Keramikkörper 42, 42' weisen jeweils einen Durchgang 50, 50' auf, die, wenn die Durchgänge 50, 50' zumindest einander überlappend angeordnet sind, einen freien Strömungsquerschnitt zum Abfließen des Kondensats vom Einlassbereich 20 in den Auslassbereich 22 des Kondensatableiters 1" erzeugen. Zur Sicherstellung einer ausreichenden Anpresskraft zwischen den Kontaktflächen 24, 24' der miteinander korrespondierenden Keramikkörper 42, 42' ist eine Vorspanneinrichtung 26" mit einem als Klammer oder Biegefeder ausgebildeten Spannelement vorgesehen. Für eine Verstellbewegung des zweiten Keramikkörpers 42' wird eine Antriebseinrichtung 16 mit nur einem Antriebsmittel 30 verwendet, wie Fig. 7 verdeutlicht. Das Antriebsmittel 30 ist ein Dehnelement mit einem Faltenbalg 32, einem Anschlussteil 34 für eine Verbindung mit dem Gehäuse 2' und mit einer Schubstange 36 zum Koppeln des Antriebsmittels 30 mit dem zweiten Keramikkörper 42'. Mittels der im Faltenbalg 32 aufgenommenen Fluidfüllung, dehnt sich das Antriebsmittel 30 entsprechend der im Inneren des Kondensatableiters 1" vorherrschenden Temperatur in seiner Längsrichtung (Pfeil X) entsprechend aus, wodurch die Durchgänge 50, 50' von erstem und zweitem Keramikkörper 42, 42' relativ zueinander verdreht werden. Die Schubstange 36 des Antriebsmittels 30 greift in dem vorliegenden Ausführungsbeilspiel an einem in radialer Richtung vorstehenden nasenartigen Vorsprung 51 des zweiten Keramikkörpers 42' an. Das Anschlussteil 34 des Antriebsmittels 30 ist schwenkbar zum Gehäuse 2' und die Schubstange 36 beweglich am Vorsprung 51 aufgenommen.

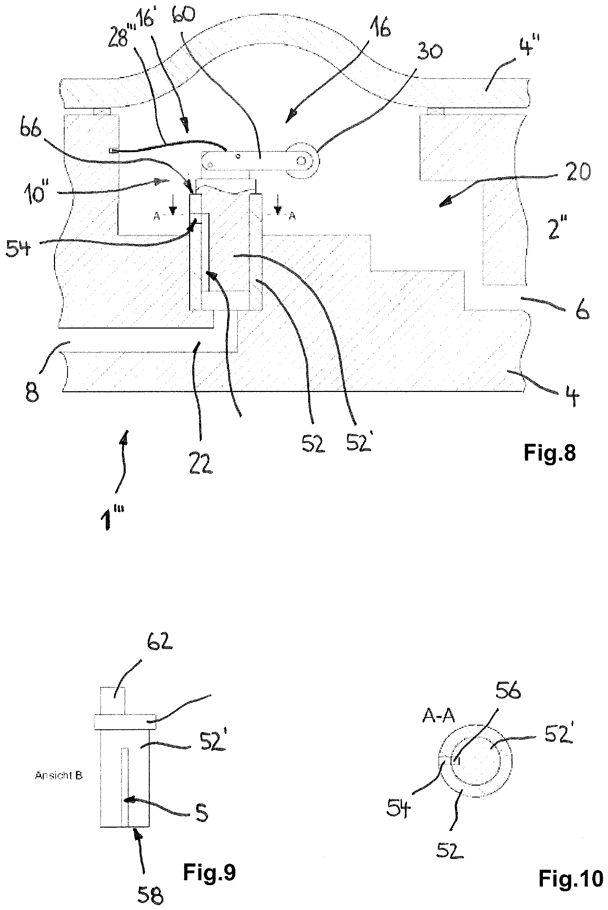

In Fig. 8 ist ein weiteres Ausführungsbeispiel eines erfindungsgemäßen Kondensatableiters 1'" gezeigt. Der Kondensatableiter 1'" weist ein Gehäuse 2" auf. Das Gehäuse 2" umfasst einen Einlass 6, einen Auslass 8 und ein Ventil 10" im Inneren des Gehäuses 2". Das Ventil 10" weist als Ventilkörper zwei Keramikkörper 52, 52' auf. Der Keramikkörper 52 ist als zylindrisches Hülsenteil mit einem sich in radialer Richtung durch das Hülsenteil erstreckenden Durchgang 54 ausgebildet. Der Keramikkörper 52 ist fest und fluiddicht am Gehäuse 2" aufgenommen. Der Keramikkörper 52' weist die Form eines zylindrischen Lagerteiles auf, das in dem freien Querschnitt des als Hülsenteil ausgebildeten Keramikkörper 52 drehbar aufgenommen ist. Der Keramikkörper 52' weist eine sich in Längsrichtung erstreckende Nut 56 auf, wie Fig. 9 zeigt, die sich über einen Abschnitt ausgehend von einem Ende 58 des Keramikkörpers 52' etwa über zwei Drittel der Länge des Keramikkörpers 52' erstreckt. Die Nut 56 im zweiten Keramikkörper 52' korrespondiert mit dem Durchgang 54 im ersten Keramikkörper 52 derart, dass bei einer überdeckenden Ausrichtung, wie Fig. 10 verdeutlicht, ein Abfließen des Kondensats vom Einlassbereich 20 in Richtung des Auslassbereichs 22 gewährleistet ist. Zur temperaturabhängigen Bewegung, wobei der als zylindrisches Lagerteil ausgebildete zweite Keramikkörper 52' drehbar in dem als Hülsenteil ausgebildeten ersten Keramikkörpers 52 aufgenommen ist, greift am zweiten Keramikkörper 52' eine Antriebseinrichtung 16 mit einem als Dehnelement ausgebildeten Antriebsmittel 30 an. Das Antriebsmittel 30 ist über einen Hebelarm 60 mit einem in Fig. 9 gezeigten Ansatz 62 mit dem zweiten Keramikkörper 52' gekoppelt. Der drehbar gleitend im ersten Keramikkörper 52 aufgenommene zweite Keramikkörper 52' ist mittels einer Vorspanneinrichtung 26' zum ersten Keramikkörper 52 gehalten. Der zweite Keramikkörper 52' liegt mit einem umlaufenden Kragen 64 an der Stirnseite 66 des ersten Keramikkörpers an. Das zur Ausbildung der Vorspanneinrichtung 26' verwendete Spannelement 28'" ist eine Klammer, Spange oder Biegefeder.

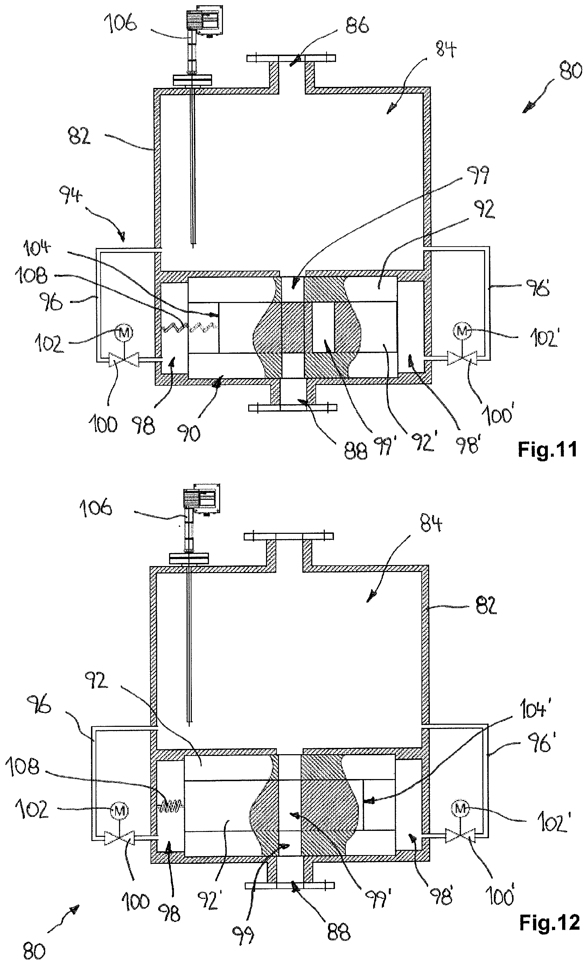

Fig. 11 und 12 zeigen ein weiteres Ausführungsbeispiel eines erfindungsgemäßen Kondensatableiters 80 mit einem Gehäuse 82 und einem Aufnahmeraum 84 für in einem System entstandenes Kondensat. Das Gehäuse weist einen Einlass 86 und einen Auslass 88 auf. Zwischen dem Aufnahmeraum 84 und dem Auslass 88 ist ein Ventil 90 angeordnet, das zwei relativ zueinander bewegliche Keramikkörper 92, 92' aufweist. Der erste Keramikkörper 92 ist fest mit dem Gehäuse 82 verbunden und in der gezeigten Ausführungsform als Aufnahme- oder Hülsenteil mit einer Aufnahme für den zweiten, relativ zum ersten Keramikkörper beweglichen Keramikkörper 92' ausgebildet. Der zweite Keramikkörper 92' ist als Zapfenteil oder Kolben ausgebildet und in der gezeigten Ausführungsform insbesondere in Richtung der Längsachse der Keramikkörper 92, 92 schiebbeweglich angeordnet.

Das Ventil 90 mit seinen beiden Keramikkörpern 92, 92' ist mit einer Antriebseinrichtung 94 gekoppelt. Mittels der Antriebseinrichtung 94 ist das Ventil von einer Geschlossenstellung (Fig. 11) in eine Offenstellung (Fig. 12) bzw. von der Offenstellung in die Geschlossenstellung bringbar, sodass Durchgänge 99, 99' in den Keramikkörper 92, 92' dann fluchten oder zueinander verschoben sind. Die Antriebseinrichtung 94 weist zwei Fluidleitungen 96, 96' auf, wobei jeweils ein erstes Ende beider Fluidleitungen mit dem Aufnahmeraum 84 für das Fluid verbunden ist. Das entgegengesetzte Ende der Fluidleitung 96 ist mit einem Druckraum 98 auf einer Seite des Ventils 90, und das entgegengesetzte Ende der Fluidleitung 96' ist mit einem Druckraum 98' auf der gegenüberliegenden Seite des Ventils 90 fluidleitend verbunden. Innerhalb der Fluidleitungen 96, 96' ist jeweils ein Steuerventil 100, 100' angeordnet, welche zum Freigeben oder Absperren der Fluidleitungen eingerichtet sind. Die Steuerventile 100, 100' werden über damit mechanisch gekoppelte Stellantriebe 102, 102' betätigt. Das Betätigen der Steuerventile 100, 100' erfolgt durch die Stellantriebe 102, 102' in Abhängigkeit von wenigstens einer sich innerhalb des Kondensatableitergehäuses 82 ändernden physikalischen Größe.

In einer Ausführungsform der Erfindung ist die Antriebseinrichtung des erfindungsgemäßen Kondensatableiters dazu eingerichtet, in Abhängigkeit von wenigstens einer innerhalb des Gehäuses oder in einem mit dem Kondensatableiter verbundenen Raum ändernden physikalischen Größe das Ventil 90 des Kondensatableiters 80 zu betätigen. Fällt der Druck oder die Temperatur innerhalb des Aufnahmeraumes 84 für das Kondensat unterhalb einem vorbestimmten Druck oder unterhalb einer vorbestimmten Temperatur ab, wird die fluid- bzw. druckleitende Verbindung zwischen dem Aufnahmeraum 84 über die Fluidleitung 96' in den Druckraum 98' hergestellt. Dadurch setzt sich der im Aufnahmeraum 84 vorherrschende Druck in den Druckraum 98' fort und wirkt dort auf eine Druckfläche 104' des Keramikkörpers 92' ein. Damit wird das Ventil 90 insgesamt in seine in Fig. 12 gezeigte Offenstellung bewegt.

Ist das innerhalb des Aufnahmeraumes 84 vorhandene Kondensat über das Ventil 90 aus dem Kondensatableiter abgeleitet, steigt üblicherweise die Temperatur und der Druck innerhalb des Aufnahmeraumes 84 wieder an. Die Temperatur und der Druck werden insbesondere über eine am Gehäuse angeordnete und in den Aufnahmeraum hineinragende Messsensorik 106 erfasst. Die Stellantriebe 102, 102' werden von der Messsenorik 106 über nicht dargestellte elektrische Verbindungsleitungen angesteuert. Steigen die Messwerte über einen voreinstellbaren Grenzwert, schließt das Steuerventil 100', und das Steuerventil 100 wird geöffnet, sodass nunmehr der Druck im Aufnahmeraum 84 über die geöffnete Fluidleitung 96 auf die Druckfläche 104 des zweiten Keramikkörpers 92' wirkt und diesen in die in Fig. 11 gezeigte Geschlossenstellung überführt. Das Steuerventil 100 wird dann wieder geschlossen. Über einen im Druckraum 98 angeordneten Rücksteller 108, in Form eines Federelements, wird der Keramikkörper 92' des Ventils 90 im Stillstand der Anlage bzw. während des Anfahrens der Anlage, wenn nur eine geringer Anlagendruck herrscht, mit dem das Ventil 90 nicht gesteuert werden kann, in der in Fig. 12 gezeigten Offenstellung gehalten.

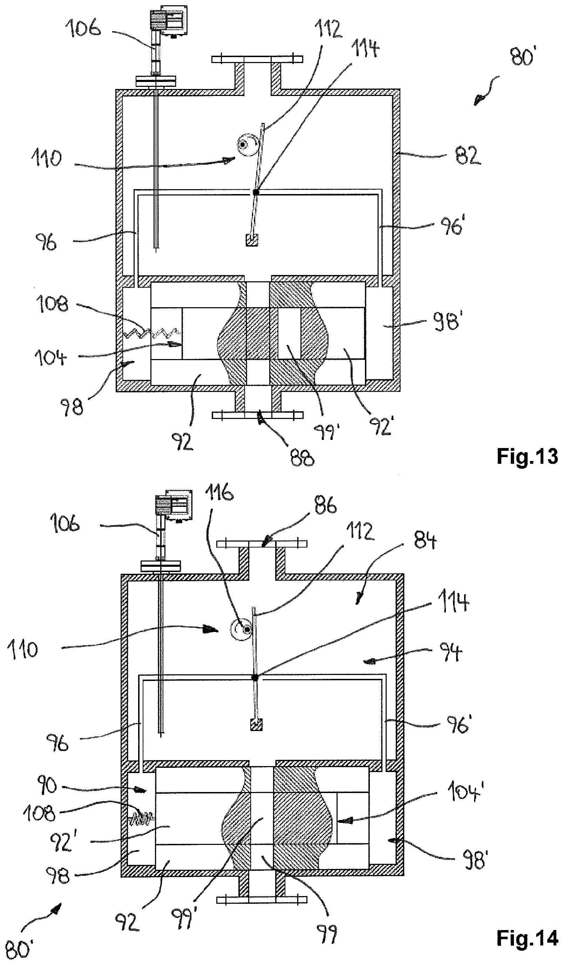

Die Fig. 13 und 14 zeigen ein weiteres Ausführungsbeispiel eines Kondensatableiters 80', der ein Gehäuse 82 und einen Aufnahmeraum 84 aufweist. Zudem ist ein Einlass 86 sowie ein Auslass 88 vorgesehen, wobei zwischen dem Aufnahmeraum 84 und dem Auslass 88 ein Ventil 90 angeordnet ist, mit dem ein gezielter Auslass des sich im Aufnahmeraum 84 ansammelnden Kondensats möglich ist. Das Ventil 90 umfasst wie in der vorherig beschriebenen Ausführungsform zwei Keramikkörper 92,92', wobei der zweite Keramikkörper 92' schiebebeweglich innerhalb des ersten Keramikkörpers 92 aufgenommen ist. Zu beiden Seiten des Ventils 90 sind Druckräume 98, 98' vorgesehen, welche über Fluidleitungen 96, 96' mit dem Aufnahmeraum 84 fluidleitend gekoppelt sind. Innerhalb des Aufnahmeraumes ist ein Stellantrieb 110 angeordnet, das dazu eingerichtet ist, wahlweise die druckleitende Verbindung vom Aufnahmeraum 84 über die eine der Fluidleitungen in den angeschlossenen Druckraum zuzulassen und über die jeweils andere der Fluidleitungen in den angeschlossenen Druckraum zu zulassen und/oder zu unterbinden. Das Stellglied 110 weist insbesondere einen Stellhebel 112 mit einem am Stellhebel angeordneten Ventilkörper 114 auf. Der Stellhebel 112, an einem Ende einseitig gelagert, ist insbesondere schwenkbar aufgenommen und wird über ein als Exzenterscheibe ausgebildetes Stellglied 116 betätigt. Die Ansteuerung des Stellantriebs erfolgt ähnlich wie in der vorherigen Ausführungsform über die Messsensorik 106, mit der die Druck- und Temperaturverhältnisse sowie der Füllstand innerhalb des Aufnahmeraumes 84 überwacht werden.

Fig. 13 zeigt die Geschlossenstellung des Ventils 90, wobei das in den Aufnahmeraum hinein ragende eine Ende nicht vom Ventilkörper 114 des Stellantriebs 110 verschlossen wird, sodass der Druck sich aus dem Aufnahmeraum bis in den Druckraum am Ventil 90 fortpflanzen kann. Der Druck wirkt dann auf die Druckfläche 104, sodass das Ventil in seiner Geschlossenstellung ist und die Durchgänge 99, 99' im ersten und zweiten Keramikkörper 92, 92' nicht fluchten. Dadurch ist der Austritt von Kondensat aus dem Aufnahmeraum 84 behindert. Sinkt der Druck und/oder die Temperatur innerhalb des Aufnahmeraumes, aufgrund eines erhöhten Aufkommens an Kondensat, unter einen Grenzwert, wird das Stellglied 116 betätigt, wodurch der mit dem Stellglied 116 gekoppelte Stellhebel 112 in die andere in Fig. 14 gezeigte Position verschwenkt wird. Gleichzeitig wird der Ventilkörper 114 vom Ende der Fluidleitung 96' zum Ende der Fluidleitung 96 bewegt und dichtet nunmehr das Ende der Fluidleitung 96 durch den am Stellhebel 112 angeordneten Ventilkörper 114 ab. Dadurch erhöht sich der Druck im Druckraum 98' und damit auf die Druckfläche 104' des zweiten Keramikkörpers 92', sodass dieser in die in Fig. 14 gezeigte Offenstellung übergeht. Dadurch fluchten die Durchlässe 99, 99' von erstem und zweitem Keramikkörper 92, 92' teilweise oder vollständig, und das Kondensat kann aus dem Aufnahmeraum 84 des Kondensatableiters 80' herausströmen. Der Druckfläche 104 ist wiederum ein Rücksteller 108 zugeordnet, der die Rückbewegung des Ventils 90 in seine Offenstellungstellung (Fig. 14) unterstützt.

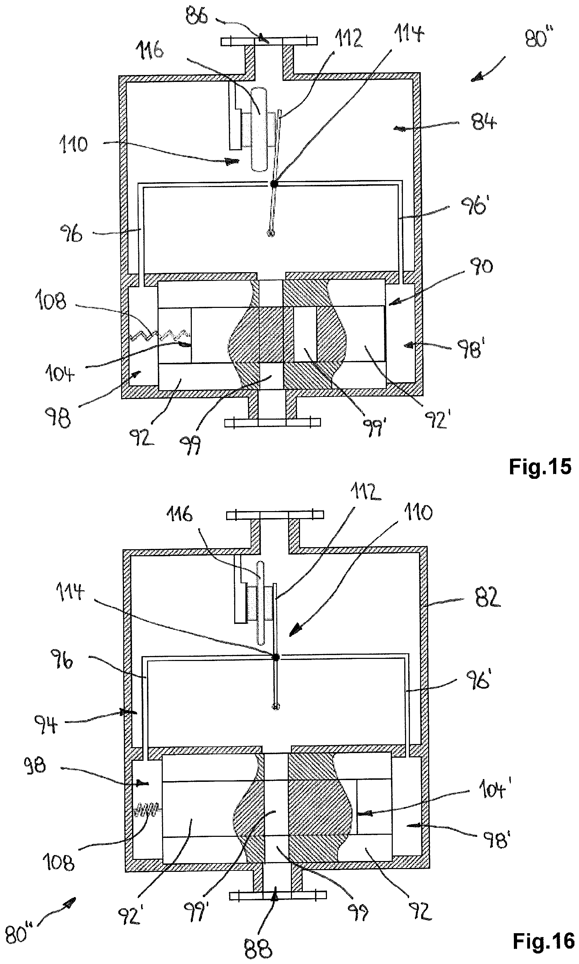

Das in Fig. 15 und Fig. 16 gezeigte Ausführungsbeispiel eines Kondensatableiters 80" entspricht grundsätzlich dem in den Fig. 13 und 14 gezeigten Ausführungsbeispiel. Der Kondensatableiter 80" umfasst ein innerhalb des Aufnahmeraumes angeordneter Stellantrieb 110' zum Regeln der Druckzufuhr über die Fluidleitungen 96, 96' zu den jeweiligen angeschlossenen Druckräumen 98, 98' zu beiden Seiten des Ventils 90. Der Stellantrieb 110 weist einen Stellhebel 112 mit einem daran angeordneten Ventilkörper 114 auf, der wahlweise das in den Aufnahmeraum vorstehende Ende der einen Fluidleitung 96 oder das in den Aufnahmeraum vorstehende Ende der jeweils anderen Fluidleitung 96' in Abhängigkeit von seiner Position im Aufnahmeraum 84 abdichtet. Je nach Position des Stellglieds 116' wird der zweite Ventilkörper 92' in die Fig. 15 gezeigte Geschlossenstellung des Ventils 90 oder in die in Fig. 16 gezeigte Offenstellung bewegt. In der Geschlossenstellung weisen die Durchgänge 99, 99' der Keramikkörper einen Versatz zueinander auf. In der Offenstellung fluchten diese miteinander teilweise oder vollständig.

Der Stellantrieb 110 weist ein mit dem freien Ende des Stellhebels 112 gekoppeltes, als Dehnelement ausgebildetes Stellglied 116' auf. Das als Dehnelement ausgebildete Stellglied 116 ist dazu eingerichtet, in Abhängigkeit von der im Aufnahmeraum 84 herrschenden Temperatur und/oder Druck selbsttätig seine Ausdehnung bzw. sein Volumen zu ändern. Dadurch wird der Stellhebel in Abhängigkeit von der Temperatur und/oder Druck im Aufnahmeraum entweder in Richtung des Endes der Fluidleitung 96' oder in Richtung des Endes der Fluidleitung 96' bewegt. Die Funktionsweise entspricht ansonsten des in den Fig. 13 und 14 gezeigten Kondensatableiters 80'. Im Gegensatz zu den in den Fig. 11 bis 14 gezeigten Ausführungsformen des Kondensatableiters 80, 80' benötigt der Kondensatableiter 80" zum Regeln der Kondensatableitung keine in den Aufnahmeraum 84 vorstehende Messsensorik. Zum Halten des Ventils 90 in seiner Offenstellung (Fig. 16) ist dem zweiten Ventilkörper 92' eine Rücksteller 108 zugeordnet, der das Ventil 90 bei geringer Anlagendrücken, insbesondere bei Anlagenstillstand oder während des Anfahrens der Anlage, in der Offenstellung hält.

In einer nicht erfindungsgemäßen Ausführungsform werden anstelle der zu den in Fig. 11 bis 16 angeführten Keramikkörper 92, 92' Ventilkörper aus einem Metall oder einem Material mit ähnlich festen Eigenschaften zur Ausbildung des Ventils 90 verwendet.

Ähnliche oder gleiche Bauteile sind mit denselben Bezugszeichen bezeichnet.

**Bezugszeichenliste**

| | | | |
|---|---|---|---|
| 1, 1', 1", 1"' | Kondensatableiter | 54 | Durchgang |
| 2, 2', 2", | Gehäuse | 56 | Nut |
| 4, 4', 4" | Gehäuseteil | 58 | Ende |
| 6 | Einlass | 60 | Hebelarm |
| 8 | Auslass | 62 | Ansatz |
| 10, 10', 10" | Ventil | 64 | Kragen |
| 12, 12' | Keramikkörper | 66 | Stirnseite |
| 14 | Sicherungsring | 80, 80', 80" | Kondensatableiter |
| 16, 16', 16" | Antriebseinrichtung | 82 | Gehäuse |
| 18 | Durchgang | 84 | Aufnahmeraum |
| 20 | Einlassbereich | 86 | Einlass |
| 22 | Auslassbereich | 88 | Auslass |
| 24, 24' | Kontaktfläche | 90 | Ventil |
| 26, 26', 26", | Vorspanneinrichtung | 92, 92' | Keramikkörper |
| 28, 28', 28", 28'" | Spannelement | 94 | Antriebseinrichtung |
| 30, 30' | Antriebsmittel | 96, 96' | Fluidleitung |
| 32 | Faltenbalg | 98, 98' | Druckraum |
| 34 | Anschlussteil | 99, 99' | Durchgang |
| 36, 36' | Schubstange | 100, 100' | Steuerventil |
| X | Längsrichtung | 102, 102' | Stellantrieb |
| 38 | elektromechanischer Antrieb | 104, 104' | Druckfläche |
| | | 106 | Messsensorik |
| 42, 42' | Keramikkörper | 108 | Rücksteller |
| 44 | Drehführung | 110, 110' | Stellantrieb |
| 46 | Vertiefung | 112 | Stellhebel |
| 48 | Drehzapfen | 114 | Ventilkörper |
| 50, 50' | Durchgang | 116, 116' | Stellglied |
| 51 | Vorsprung | | |
| 52, 52' | Keramikkörper | | |

## Patentansprüche

1. Kondensatableiter zum Ableiten von Kondensat, mit
einem Gehäuse (2, 2', 2", 82),
einem in dem Gehäuse ausgebildeten Einlass (6, 86) zum Einleiten von Fluid in das Innere des Gehäuses (2, 2', 2", 82),
einem in dem Gehäuse ausgebildeten Auslass (8, 88) zum Ableiten von Fluid aus dem Inneren des Gehäuses (2, 2', 2", 82),
einem in dem Gehäuse angeordneten Ventil (10, 10', 10", 90) zum Freigeben beziehungsweise Verschließen eines Strömungsquerschnitts in dem Kondensatableiter (1, 1', 1", 1'", 80, 80', 80"),
wobei das Ventil (10, 10', 10", 90) einen ersten Keramikkörper (12, 42, 52, 92) und einen mit dem ersten Keramikkörper in Kontakt stehenden zweiten Keramikkörper (12', 42', 52', 92') aufweist, wobei der erste und zweite Keramikkörper (12, 12', 42, 42', 52, 52', 92, 92') so gestaltet und mittels mindestens einer Antriebseinrichtung (16, 16', 16", 94) so relativ zueinander bewegbar sind, dass der Strömungsquerschnitt veränderbar ist,
**dadurch gekennzeichnet, dass** die Antriebseinrichtung (94) dazu eingerichtet ist, mittels des Druckes des Fluids im Kondensatableiter (80, 80', 80") oder in einem mit dem Kondensatableiter in Verbindung stehenden Raum den zweiten Keramikkörper (92') relativ zum ersten Keramikkörper (92) zu bewegen,
wobei mindestens eine Fluidleitung (96, 96') vorgesehen ist, über welche der Fluiddruck im Kondensatableiter (80, 80', 80") oder Raum auf eine Druckfläche (104, 104') am zweiten Keramikkörper (92') zum Bewegen des zweiten Keramikkörpers (92') relativ zum ersten Keramikkörper (92) geleitet wird.

2. Kondensatableiter nach Anspruch 1,
**dadurch gekennzeichnet, dass** der zweite Keramikkörper (12', 42', 52', 92') mittels mindestens der Antriebseinrichtung (16, 16', 16", 94) gleitend zu dem ersten Keramikkörper (12, 42, 52, 92), bewegbar ist und der erste Keramikkörper (12, 42, 52, 92) bevorzugt im Gehäuse lösbar befestigt ist.

3. Kondensatableiter nach Anspruch 1 und/oder 2,
**dadurch gekennzeichnet, dass** der erste und zweite Keramikkörper (12, 12', 42, 42', 52, 52', 92, 92') über einen Kontaktbereich miteinander in Anlage stehen, wobei vorzugsweise der erste und zweite Keramikkörper (12, 12', 42, 42') jeweils eine im Wesentlichen ebene Kontaktfläche (24, 24') aufweisen.

4. Kondensatableiter nach mindestens einem der vorstehenden Ansprüche,
**dadurch gekennzeichnet, dass** die Kontaktflächen (24, 24') von erstem und zweitem Keramikkörper (12, 12', 42, 42', 52, 52', 92, 92') unterschiedliche Rauheiten aufweisen; und/oder zwischen den Kontaktflächen (24, 24') ein Flächentraganteil vorgesehen ist, der auf mindestens 75% oder mehr, vorzugsweise von etwa 75 bis 90%, eingestellt ist; und/oder Keramikkörper (12, 12', 42, 42', 52, 52', 92, 92') unterschiedliche Härten aufweisen, wobei der erste und/oder zweite Keramikkörper (12, 12', 42, 42', 52, 52', 92, 92') vorzugsweise aus einem Material gebildet ist oder ein Material enthält, das ausgewählt ist aus der Gruppe bestehend aus Siliciumcarbid, Aluminiumoxyd und Zirkoniumoxyd; und/oder die Kontaktflächen (24, 24') von erstem und/oder zweitem Keramikkörper (12, 12', 42, 42', 52, 52', 92, 92') eine Beschichtung, vorzugsweise eine Diamantbeschichtung, aufweisen.

5. Kondensatableiter nach mindestens einem der vorstehenden Ansprüche,
**gekennzeichnet durch** eine Vorspanneinrichtung (26, 26', 26") zum Aufbringen einer Anpresskraft zwischen dem ersten und zweiten Keramikkörper (12, 12', 42, 42', 52, 52'), wobei vorzugsweise die Vorspanneinrichtung (26, 26', 26") ein elastisch verformbares Spannelement (28, 28', 28", 28'") aufweist, wobei ein Abschnitt des Spannelements (28, 28', 28", 28'") mit dem zweiten Keramikkörper (12', 42', 52') und mindestens ein Abschnitt mit dem Gehäuse (2, 2', 2") oder dem ersten Keramikkörper (12, 42, 52) verbunden sind, und
wobei das Spannelement (28, 28', 28", 28'") vorzugsweise als Zugfeder, Spiralfeder, Clip oder Klammer ausgebildet ist.

6. Kondensatableiter nach mindestens einem der vorstehenden Ansprüche,
**dadurch gekennzeichnet, dass** mindestens einer der Keramikkörper (12, 12', 42, 42'), vorzugsweise beide Keramikkörper, im Wesentlichen scheibenförmig ausgebildet und relativ zueinander, bevorzugt aufeinander, verschiebbar sind;
und/oder der erste Keramikkörper (52, 92) als Aufnahme- oder Hülsenteil und der zweite Keramikkörper (52', 92') als ein im Aufnahmeteil-oder Hülsenteil translatorisch bewegbares oder drehbeweglich aufgenommenes Zapfenteil ausgebildet ist;
und/oder mindestens einer der Keramikkörper (12, 42, 42', 52), vorzugsweise der erste Keramikkörper (12, 42, 52), einen Durchgang (18, 50, 50', 54) für das Fluid aufweist, wobei der andere, vorzugsweise der zweite bewegbare Keramikkörper (12', 42', 52') mittels der Antriebseinrichtung so relativ zu dem Durchgang (18, 50, 54) verschiebbar ist, dass der Strömungsquerschnitt für das Fluid bevorzugt stufenlos zwischen einer Geschlossen-Stellung und einer Offen-Stellung veränderbar ist;

7. Kondensatableiter nach mindestens einem der vorstehenden Ansprüche,
wobei der erste und der zweite Keramikkörper (92, 92') einen Durchgang (99, 99') für das abzuleitende Fluid aufweisen, wobei der zweite bewegliche Keramikkörper (92') mit seinem Durchgang (99') mittels der Antriebseinrichtung (94) so zum Durchgang (99) im ersten Keramikkörper (92) verschiebbar ist, dass der Strömungsquerschnitt für das Fluid bevorzugt stufenlos zwischen der Geschlossen-Stellung und der Offen-Stellung einstellbar ist;und/oder mindestens einer der Keramikkörper (12, 12', 42, 42', 52, 52', 92, 92') mittels einer Führung relativ zu dem ersten Keramikkörper (12, 42, 52) führbar ist,
wobei vorzugsweise die Führung miteinander in Eingriff stehende Führungselemente aufweist, welche als Ausnehmung (46) oder Nut in einem Keramikkörper (12, 42, 52) und als ein an dem anderen Keramikkörper (12', 42', 52') korrespondierender Materialvorsprung (48) ausgebildet sind.

8. Kondensatableiter nach mindestens einem der vorstehenden Ansprüche, **dadurch gekennzeichnet, dass** eine erste Fluidleitung (96) mit dem Kondensatableiter (80, 80', 80") oder dem Raum und mit einem auf einer Seite des zweiten bewegbaren Keramikkörper (92') angeordneten Druckraum (98) fluidleitend verbindbar, und eine zweite Fluidleitung (96') mit dem Kondensatableiter (80, 80', 80") oder dem Raum und mit einem auf der anderen gegenüberliegenden Seiten des zweiten bewegbaren Keramikkörper (92') angeordneten Druckraum (98') fluidleitend verbindbar ist, wobei die Druckverhältnisse in den Druckräumen (98, 98') zu beiden Seiten des bewegbaren Keramikkörpers (92') über die Fluidleitungen (96, 96') einstellbar sind, sodass der zweite Keramikkörper (92') vorzugsweise in entgegengesetzte Richtungen bewegbar ist.

9. Kondensatableiter nach Anspruch 8,
**dadurch gekennzeichnet, dass** in der ersten und/oder zweiten Fluidleitung (96, 96') jeweils ein mittels eines Stellantriebes (102, 102') betätigbares Steuerventil (100, 100') zum Freigeben oder Absperren der Fluidleitungen (96, 96') angeordnet ist,
oder dass der ersten und zweiten Fluidleitung (96, 96') im Kondensatableiter (80, 80', 80") oder in dem mit Kondensatableiter verbundenen Raum ein Stellantrieb (110, 110'), insbesondere ein bewegbarer, vorzugsweise schwenkbarer Stellhebel (112) mit einem daran angeordneten Ventilkörper (114), zugeordnet ist, welches dazu eingerichtet ist, wahlweise die Druckzufuhr in die eine der Fluidleitungen (96, 96') zu zulassen und in die andere der Fluidleitungen (96, 96') zu unterbinden.

10. Kondensatableiter nach Anspruch 9,
**dadurch gekennzeichnet, dass** der Stellantrieb (110, 110') mittels eines in Abhängigkeit von wenigstens eines sich innerhalb des Kondensatableiter-Gehäuses (2, 2', 2") oder dem Raum ändernden physikalischen Größe ansteuerbaren Stellglieds (116, 116') zwischen seinen entweder die erste oder die zweite der Fluidleitungen (96, 96') freigebenden Arbeitspostionen verstellbar ist,
wobei das Stellglied (116, 116') vorzugsweise ein durch Temperatur und/oder Druck des sich im Kondensatableiter ansammelnden Fluids gesteuertes Dehnelement, Faltenbalgelement, elektrischer Antrieb, elektromechanischer Antrieb, pneumatischer Antrieb und/oder Bimetall-Antrieb aufweist.

11. Kondensatableiter nach einem der Ansprüche 6 bis 10,
**dadurch gekennzeichnet, dass** der erste Keramikkörper (52, 92) im Wesentlichen als zylindrisches Rohr und der zweite Keramikkörper als zylindrischer Kolben (52', 92') ausgebildet ist, und die Durchgänge (50, 99, 99') für das abzuleitende Fluid im Wesentlichen senkrecht zur Längsachse von erstem und zweitem Keramikkörper (52, 52', 92, 92') angeordnet verlaufen.

12. Kondensatableiter nach mindestens einem der vorstehenden Ansprüche,
**dadurch gekennzeichnet, dass** die Antriebseinrichtung (16, 16', 16", 94) mindestens ein, vorzugsweise zwei Antriebsmittel (30, 30') zum Bewegen eines der Keramikkörper (12, 12', 42, 42', 52, 52', 92, 92') aufweist, wobei ein Antriebsmittel oder beide Antriebsmittel (30, 30') dazu eingerichtet ist/sind, in Abhängigkeit von einer sich innerhalb des Kondensatableiter-Gehäuses (2, 2', 2") ändernden physikalischen Größe oder erfassten Messgröße des Fluids den bevorzugt zweiten Keramikkörper (12', 42', 52') zu bewegen.

13. Kondensatableiter nach mindestens einem der vorstehenden Ansprüche,
**dadurch gekennzeichnet, dass** mindestens zwei Antriebsmittel (30, 30') zum Bewegen des vorzugsweise zweiten Keramikkörpers (12', 42', 52') vorgesehen sind, wobei die Antriebsmittel (30, 30') vorzugsweise in unterschiedlichen Wirkrichtungen an dem Keramikkörper (12', 42', 52') angreifen, vorzugsweise in winkelig zueinander verlaufenden Wirkrichtungen, vorzugsweise mit einem Winkel im Bereich von etwa 70° bis etwa 110°, und/oder wobei vorzugsweise das erste Antriebsmittel (30) in einem ersten Temperaturbereich *ΔT* den Keramikkörper bewegt und das zweite Antriebsmittel (30') in einem zweiten Temperaturbereich *ΔT* den Keramikkörper bewegt, wobei erster und zweiter Temperaturbereich unterschiedliche Abstände von der Siedelinie aufweisen.

14. Kondensatableiter nach mindestens einem der vorstehenden Ansprüche,
**gekennzeichnet durch** mindestens eine Temperaturmesseinrichtung zum Aufnehmen der Fluidtemperatur im Inneren des Gehäuses (2, 2', 2") oder benachbart zu dem Gehäuse (2, 2', 2"), wobei die Temperaturmesseinrichtung direkt oder über eine Steuerungseinrichtung signalübertragend mit der Antriebseinrichtung (16, 16', 16", 94) gekoppelt ist,
wobei die Temperaturmesseinrichtung vorzugsweise als Widerstandsthermometer oder Thermoelement ausgebildet ist.

15. Kondensatableiter nach mindestens einem der vorstehenden Ansprüche, **gekennzeichnet durch** eine elektrische Energieerzeugungseinrichtung zum Erzeugen von elektrischer Energie aus in dem Fluid enthaltener thermischer Energie, die vorzugsweise als Peltier-Element ausgebildet und zur Energieversorgung von zumindest dem oder den Antriebsmitteln (30, 30') und/oder einer Steuerungseinrichtung eingerichtet ist.

16. Verfahren zum Ableiten von Kondensat in einem Kondensatableiter, mit den Schritten:
Einleiten eines Fluids in einen Kondensatableiter (1, 1', 1", 1'", 80, 80', 80"), der ein Gehäuse (2, 2', 2", 82), einen Einlass (6, 86) und einen Auslass (8, 88) und ein Ventil (10, 10', 10", 90) aufweist,
Bewegen eines Keramikkörpers (12', 42', 52', 92') relativ zu einem in Kontakt mit dem Keramikkörper (12', 42', 52', 92') stehenden, weiteren Keramikkörper (12, 42, 52, 92), sodass ein Strömungsquerschnitt für das Fluid verändert wird,
im Falle des freien Strömungsquerschnitts, Ableiten des Fluids aus dem Gehäuse (2, 2', 2", 82) durch den Auslass (8, 88),
wobei die Bewegung des einen Keramikkörpers (12', 42', 52', 92') relativ zu dem weiteren Keramikkörper (12, 42, 52, 92) in Abhängigkeit des Druckes des Fluids im Kondensatableiter (80, 80', 80") oder in einem mit dem Kondensatableiter in Verbindung stehenden Raum vorgenommen wird, um den zweiten Keramikkörper (92') relativ zum ersten Keramikkörper (92) zu bewegen,
wobei der Fluiddruck im Kondensatableiter (80, 80', 80") oder Raum auf eine Druckfläche (104, 104') am zweiten Keramikkörper (92') zum Bewegen des zweiten Keramikkörpers (92') relativ zum ersten Keramikkörper (92) über eine Fluidleitung eingeleitet wird;
wobei das Bewegen des einen Keramikkörpers (12', 42', 52', 92') relativ zum anderen Keramikkörper (12, 42, 52, 92) bevorzugt ferner den Schritt umfasst:
Abgleiten von ebenen Kontaktflächen (24, 24') der Keramikkörper (12, 12', 42, 42',) aufeinander oder von zylindrischen Kontaktflächen der Keramikkörper (52, 52', 92, 92') ineinander.

## Claims

1. Steam trap for draining off condensate, comprising
a housing (2, 2', 2", 82),
an inlet (6, 86) formed in the housing for introducing fluid inside the housing (2, 2', 2", 82),
an outlet (8, 88) formed in the housing for draining off fluid from inside the housing (2, 2', 2", 82),
a valve (10, 10', 10", 90) arranged in the housing for opening or closing a flow cross-section in the steam trap (1, 1', 1", 1"', 80, 80', 80"),
wherein the valve (10, 10', 10", 90) has a first ceramic body (12, 42, 52, 92) and a second ceramic body (12', 42', 52', 92') in contact with the first ceramic body, wherein the first and second ceramic bodies (12, 12', 42, 42', 52, 52', 92, 92') are configured in such a way and are moveable relative to one another by means of at least one drive device (16, 16', 16", 94) such that the flow cross-section can be varied,
**characterised in that** the drive device (94) is configured to move the second ceramic body (92') relative to the first ceramic body (92) by means of pressure of the fluid in the steam trap (80, 80', 80") or in a chamber in connection with the steam trap,
wherein at least one fluid line (96, 96') is provided, by means of which the fluid pressure in the steam trap (80, 80', 80") or chamber is directed to a pressure face (104, 104') on the second ceramic body (92') for moving the second ceramic body (92') relative to the first ceramic body (92).

2. Steam trap according to claim 1,
**characterised in that** the second ceramic body (12', 42', 52', 92') by means of at least the drive device (16, 16', 16", 94) can be moved sliding relative to the first ceramic body (12, 42, 52, 92) and the first ceramic body (12, 42, 52, 92) is preferably secured detachably in the housing.

3. Steam trap according to claim 1 and/or 2,
**characterised in that** the first and second ceramic body (12, 12', 42, 42', 52, 52', 92, 92') bear against one another on a contact area, wherein preferably the first and second ceramic body (12, 12', 42, 42') each have an essentially planar contact face (24, 24').

4. Steam trap according to at least one of the preceding claims,
**characterised in that** the contact faces (24, 24') of the first and second ceramic body (12, 12', 42, 42', 52, 52', 92, 92') have different roughness levels, and/or between the contact faces (24, 24') a face support area is provided which is adjusted to at least 75% or more, preferably about 75 to 90%;
and/or ceramic bodies (12, 12', 42, 42', 52, 52', 92, 92') have different hardness values, wherein the first and/or second ceramic body (12, 12', 42, 42', 52, 52', 92, 92') is preferably made from a material or contains a material which is selected from a group consisting of silicon carbide, aluminium oxide and zirconium oxide;
and/or the contact faces (24, 24') of the first and/or second ceramic body (12, 12', 42, 42', 52, 52', 92, 92') have a coating, preferably a diamond coating.

5. Steam trap according to at least one of the preceding claims, **characterised by** a pretensioning device (26, 26', 26") for applying a pressing force between the first and second ceramic body (12, 12', 42, 42', 52, 52'), wherein preferably the pretensioning device (26, 26', 26") has an elastically deformable tensioning element (28, 28', 28", 28'"), wherein one section of the tensioning element (28, 28', 28", 28'") is connected to the second ceramic body (12', 42', 52') and at least one section is connected to the housing (2, 2', 2") or the first ceramic body (12, 42, 52), and
wherein the tensioning element (28, 28', 28", 28'") is preferably designed as a tension spring, helical spring, clip or clamp.

6. Steam trap according to at least one of the preceding claims,
**characterised in that** at least one of the ceramic bodies (12, 12', 42, 42'), preferably both ceramic bodies, are designed to be essentially disc-like and are displaceable relative to one another, preferably on one another;
and/or the first ceramic body (52, 92) is designed as a receiving or sleeve part and the second ceramic body (52', 92') is designed as a spigot which is mounted to be movable or rotatable in the receiving part or sleeve part;
and/or at least one of the ceramic bodies (12, 42, 42', 52), preferably the first ceramic body (12, 42, 52), has a passage (18, 50, 50', 54) for the fluid, wherein the other, preferably the second movable ceramic body (12', 42', 52'), can be displaced by means of the drive device relative to the passage (18, 50, 54) such that the flow cross-section for the fluid can be varied preferably steplessly between a closed position and an open position.

7. Steam trap according to at least one of the preceding claims,
wherein the first and the second ceramic body (92, 92') have a passage (99, 99') for the fluid to be drained off, wherein the second movable ceramic body (92') can be displaced with its passage (99') by means of the drive device (94) relative to the passage (99) in the first ceramic body (92) so that the flow cross-section for the fluid can preferably be adjusted steplessly between the closed position and the open position and/or at least one of the ceramic bodies (12, 12', 42, 42', 52, 52', 92, 92') can be guided by means of a guide relative to the first ceramic body (12, 42, 52), wherein preferably the guide has guiding elements which are in engagement with one another, which are designed as a recess (46) or groove in a ceramic body (12, 42, 52) and as a material projection (48) corresponding with the other ceramic body (12', 42', 52').

8. Steam trap according to at least one of the preceding claims,
**characterised in that** a first fluid line (96) can be connected so as to conduct fluid to the steam trap (80, 80', 80") or the chamber and to a pressure chamber (98) arranged on one side of the second movable ceramic body (92'), and a second fluid line (96') can be connected so as to conduct fluid to the steam trap (80, 80', 80") or the chamber and to a pressure chamber (98') arranged on the other opposite side of the second movable ceramic body (92'), wherein the pressure ratios in the pressure chambers (98, 98') are adjustable on both sides of the movable ceramic body (92') via the fluid lines (96, 96'), so that the second ceramic body (92') can preferably be moved in opposite directions.

9. Steam trap according to claim 8,
**characterised in that** in the first and/or second fluid line (96, 96') respectively a control valve (100, 100') activated by means of an actuator (102, 102') is arranged for opening or blocking the fluid lines (96, 96'), or **in that** an actuator (110, 110'), in particular a movable, preferably pivotable control lever (112) with a valve body (114) arranged thereon, is assigned to the first and second fluid line (96, 96') in the steam trap (80, 80', 80") or in the chamber connected to the steam trap,
which is configured to selectively allow pressure to be supplied to one of the fluid lines (96, 96') and prevent it being supplied to the other fluid lines (96, 96').

10. Steam trap according to claim 9,
**characterised in that** the actuator (110, 110') can be adjusted by means of a control element (116, 116') controlled as a function of at least one physical variable changing inside the steam trap housing (2, 2', 2") or the chamber between its working positions opening either the first or the second of the fluid line (96, 96'),
wherein the control element (116, 116') preferably comprises an expansion element, a bellows element, electric drive, electromechanical drive, pneumatic drive and/or bimetal drive which is controlled by temperature and/or by the pressure of the fluid collecting in the steam trap.

11. Steam trap according to any of claims 6 to 10,
**characterised in that** the first ceramic body (52, 92) is designed essentially as a cylindrical pipe and the second ceramic body as a cylindrical piston (52', 92'), and the passages (50, 99, 99') for the fluid to be drained off are essentially perpendicular to the longitudinal axis of the first and second ceramic body (52, 52', 92, 92').

12. Steam trap according to at least one of the preceding claims,
**characterised in that** the drive device (16, 16', 16", 94) comprises at least one, preferably two drives (30, 30') for moving one of the ceramic bodies (12, 12', 42, 42', 52, 52', 92, 92'), wherein one drive or both drives (30, 30') is/are configured, to move preferably the second ceramic body (12', 42', 52') as a function of a physical variable or detected measurement variable of the fluid that changes inside the steam trap-housing (2, 2', 2").

13. Steam trap according to at least one of the preceding claims,
**characterised in that** at least two drives (30, 30') are provided for moving preferably the second ceramic body (12', 42', 52'), wherein the drives (30, 30') preferably engage in different working directions on the ceramic body (12', 42', 52'), preferably in working directions at an angle to one another, preferably at an angle in the range of about 70° to about 110°, and/or wherein preferably the first drive (30) moves the ceramic body in a first temperature range *ΔT* and the second drive (30') moves the ceramic body in a second temperature range *ΔT,* wherein the first and second temperature range have different distances from the boiling point curve.

14. Steam trap according to at least one of the preceding claims, **characterised by** at least one temperature measuring device for recording the fluid temperature inside the housing (2, 2', 2") or adjacent to the housing (2, 2', 2"), wherein the temperature measuring device is coupled to the drive device (16, 16', 16", 94) directly or via a control device transmitting a signal, wherein the temperature measuring device is preferably designed as a resistance thermometer or thermocouple.

15. Steam trap according to at least one of the preceding claims, **characterised by** an electrical power generating device for generating electrical power from thermal energy contained in the fluid, which is preferably in the form of a Peltier element and is configured to supply power to at least the drive or drives (30, 30') and/or a control device.

16. Method for draining off condensation in a steam trap, comprising the steps:
introducing a fluid into a steam trap (1, 1', 1", 1"', 80, 80', 80"), which has a housing (2, 2', 2", 82), an inlet (6, 86) and an outlet (8, 88) and a valve (10, 10', 10", 90),
moving a ceramic body (12', 42', 52', 92') relative to an additional ceramic body (12, 42, 52, 92) in contact with the ceramic body (12', 42', 52', 92') so that a flow cross-section for the fluid is changed,
in case of a free flow cross-section, draining the fluid out of the housing (2, 2', 2", 82) through the outlet (8, 88),
wherein the movement of one ceramic body (12', 42', 52', 92') relative to the other ceramic body (12, 42, 52, 92) is performed as a function of the pressure of fluid in the steam trap (80, 80', 80") or in a chamber in connection with the steam trap, in order to move the second ceramic body (92') relative to the first ceramic body (92),
wherein the fluid pressure in the steam trap (80, 80', 80") or chamber is introduced onto a pressure face (104, 104') on the second ceramic body (92') for moving the second ceramic body (92') relative to the first ceramic body (92) via a fluid line;
wherein the movement of one ceramic body (12', 42', 52', 92') relative to the other ceramic body (12, 42, 52, 92) preferably also comprises the step:
sliding flat contact faces (24, 24') of the ceramic bodies (12, 12', 42, 42') onto one another or cylindrical contact faces of the ceramic bodies (52, 52', 92, 92') into one another.

## Revendications

1. Séparateur de condensat pour l'évacuation de condensat, avec
un boîtier (2, 2', 2", 82),
une entrée (6, 86) réalisée dans le boîtier pour l'introduction de fluide à l'intérieur du boîtier (2, 2', 2", 82),
une sortie (8, 88) réalisée dans le boîtier pour l'évacuation de fluide de l'intérieur du boîtier (2, 2', 2", 82),
une soupape (10, 10', 10", 90) disposée dans le boîtier pour libérer ou fermer une section d'écoulement dans le séparateur de condensat (1, 1', 1", 1'", 80, 80', 80"),
dans lequel la soupape (10, 10', 10", 90) présente un premier corps céramique (12, 42, 52, 92) et un deuxième corps céramique (12', 42', 52', 92') en contact avec le premier corps céramique, dans lequel le premier et le deuxième corps céramique (12, 12', 42, 42', 52, 52', 92, 92') sont conçus et peuvent être déplacés l'un par rapport à l'autre au moyen d'au moins un dispositif d'entraînement (16, 16', 16", 94), de sorte que la section d'écoulement puisse être modifiée,
**caractérisé en ce que** le dispositif d'entraînement (94) est conçu pour déplacer le deuxième corps céramique (92') par rapport au premier corps céramique (92) au moyen de la pression du fluide dans le séparateur de condensat (80, 80', 80") ou dans un espace relié au séparateur de condensat,
dans lequel au moins une conduite de fluide (96, 96') est prévue, par l'intermédiaire de laquelle la pression de fluide est guidée dans le séparateur de condensat (80, 80', 80") ou l'espace sur une surface de pression (104, 104') sur le deuxième corps céramique (92') pour déplacer le deuxième corps céramique (92') par rapport au premier corps céramique (92).

2. Séparateur de condensat selon la revendication 1,
**caractérisé en ce que** le deuxième corps céramique (12', 42', 52', 92') peut être déplacé en glissant par rapport au premier corps céramique (12, 42, 52, 92) au moyen au moins du dispositif d'entraînement (16, 16', 16", 94) et le premier corps céramique (12, 42, 52, 92) est de préférence fixé de manière détachable dans le boîtier.

3. Séparateur de condensat selon la revendication 1 et/ou 2,
**caractérisé en ce que** le premier et le deuxième corps céramique (12, 12', 42, 42', 52, 52', 92, 92') sont en appui l'un avec l'autre par l'intermédiaire d'une zone de contact, dans lequel de préférence le premier et le deuxième corps céramique (12, 12', 42, 42') présentent respectivement une surface de contact (24, 24') sensiblement plane.

4. Séparateur de condensat selon au moins l'une quelconque des revendications précédentes,
**caractérisé en ce que** les surfaces de contact (24, 24') du premier et du deuxième corps céramique (12, 12', 42, 42', 52, 52', 92, 92') présentent des rugosités différentes ;
et/ou une fraction portante de la surface, qui est réglée sur au moins 75 % ou plus, de préférence d'environ 75 à 90 %, est prévue entre les surfaces de contact (24, 24') ;
et/ou les corps céramiques (12, 12', 42, 42', 52, 52', 92, 92') présentent différentes duretés, dans lequel le premier et/ou le deuxième corps céramique (12, 12', 42, 42', 52, 52', 92, 92') est de préférence formé d'un matériau ou contient un matériau qui est choisi dans le groupe constitué de carbure de silicium, d'oxyde d'aluminium et d'oxyde de zirconium ;
et/ou les surfaces de contact (24, 24') du premier et/ou du deuxième corps céramique (12, 12', 42, 42', 52, 52', 92, 92') présentent un revêtement, de préférence un revêtement en diamant.

5. Séparateur de condensat selon au moins l'une quelconque des revendications précédentes,
**caractérisé par** un dispositif de précontrainte (26, 26', 26") destiné à appliquer une force de pression entre le premier et le deuxième corps céramique (12, 12', 42, 42', 52, 52'), dans lequel de préférence le dispositif de précontrainte (26, 26', 26") présente un élément de serrage (28, 28', 28", 28"') déformable élastiquement, dans lequel une partie de l'élément de serrage (28, 28', 28", 28"') est reliée au deuxième corps céramique (12', 42', 52') et au moins une partie au boîtier (2, 2', 2'') ou au premier corps céramique (12, 42, 52), et
dans lequel l'élément de serrage (28, 28', 28", 28"') est réalisé de préférence en tant que ressort de traction, ressort spiral, clip ou agrafe.

6. Séparateur de condensat selon au moins l'une quelconque des revendications précédentes,
**caractérisé en ce qu'**au moins un des corps céramiques (12, 12', 42, 42'), de préférence les deux corps céramiques, sont réalisés sensiblement en forme de plaquette et peuvent coulisser l'un par rapport à l'autre, de préférence l'un vers l'autre ;
et/ou le premier corps céramique (52, 92) est réalisé en tant que pièce de logement ou de manchon et le deuxième corps céramique (52', 92') en tant que pièce de tenon mobile en translation ou logée mobile en rotation dans la pièce de logement ou de manchon ;
et/ou au moins un des corps céramiques (12, 42, 42', 52), de préférence le premier corps céramique (12, 42, 52), présente un passage (18, 50, 50', 54) pour le fluide, dans lequel l'autre, de préférence le deuxième corps céramique (12', 42', 52') mobile, peut coulisser par rapport au passage (18, 50, 54) au moyen du dispositif d'entraînement, de sorte que la section d'écoulement pour le fluide puisse être modifiée de préférence en continu entre une position fermée et une position ouverte.

7. Séparateur de condensat selon au moins l'une quelconque des revendications précédentes,
dans lequel le premier et le deuxième corps céramique (92, 92') présentent un passage (99, 99') pour le fluide à évacuer, dans lequel le deuxième corps céramique (92') mobile avec son passage (99') peut coulisser au moyen du dispositif d'entraînement (94) vers le passage (99) dans le premier corps céramique (92), de sorte que la section d'écoulement pour le fluide puisse être réglée de préférence en continu entre la position fermée et la position ouverte ; et/ou au moins un des corps céramiques (12, 12', 42, 42', 52, 52', 92, 92') peut être guidé par rapport au premier corps céramique (12, 42, 52) au moyen d'un guidage,
dans lequel de préférence le guidage présente des éléments de guidage en prise les uns avec les autres, lesquels sont réalisés en tant qu'évidement (46) ou rainure dans un corps céramique (12, 42, 52) et en tant que partie saillante de matériau (48) correspondante sur l'autre corps céramique (12', 42', 52').

8. Séparateur de condensat selon au moins l'une quelconque des revendications précédentes,
**caractérisé en ce qu'**une première conduite de fluide (96) peut être en liaison fluidique avec le séparateur de condensat (80, 80', 80") ou l'espace et avec une chambre de pression (98) disposée sur un côté du deuxième corps céramique (92') mobile, et une deuxième conduite de fluide (96') peut être en liaison fluidique avec le séparateur de condensat (80, 80', 80") ou l'espace et avec une chambre de pression (98') disposée sur les autres côtés opposés du deuxième corps céramique (92') mobile, dans lequel les taux de compression dans les chambres de pression (98, 98') des deux côtés du corps céramique (92') mobile sont réglables par l'intermédiaire des conduites de fluide (96, 96'), de sorte que le deuxième corps céramique (92') puisse être déplacé de préférence dans des directions opposées.

9. Séparateur de condensat selon la revendication 8,
**caractérisé en ce que** respectivement une soupape de commande (100, 100') pouvant être actionnée au moyen d'un mécanisme d'actionnement (102, 102') pour libérer ou fermer les conduites de fluide (96, 96') est disposée dans la première et/ou la deuxième conduite de fluide (96, 96'),
ou qu'un entraînement d'actionnement (110, 110'), en particulier un levier d'actionnement (112) mobile, de préférence pivotant, avec un corps de soupape (114) disposé sur celui-ci, lequel est conçu pour sélectivement autoriser l'amenée de pression dans l'une des conduites de fluide (96, 96') et l'empêcher dans l'autre des conduites de fluide (96, 96'), est associé à la première et à la deuxième conduite de fluide (96, 96') dans le séparateur de condensat (80, 80', 80") ou dans l'espace relié au séparateur de condensat.

10. Séparateur de condensat selon la revendication 9,
**caractérisé en ce que** l'entraînement d'actionnement (110, 110') peut être déplacé entre ses positions de travail libérant soit la première soit la deuxième des conduites de fluide (96, 96') au moyen d'un élément d'actionnement (116, 116') pouvant être commandé en fonction d'au moins une grandeur physique variant à l'intérieur du boîtier de séparateur de condensat (2, 2', 2") ou l'espace,
dans lequel l'élément d'actionnement (116, 116') présente de préférence un élément extensible, élément de soufflet, entraînement électrique, entraînement électromécanique, entraînement pneumatique et/ou entraînement bimétallique commandé par température et/ou pression du fluide s'accumulant dans le séparateur de condensat.

11. Séparateur de condensat selon l'une quelconque des revendications 6 à 10,
**caractérisé en ce que** le premier corps céramique (52, 92) est réalisé sensiblement en tant que tube cylindrique et le deuxième corps céramique en tant que piston cylindrique (52', 92'), et les passages (50, 99, 99') pour le fluide à évacuer s'étendent de manière disposée sensiblement perpendiculairement à l'axe longitudinal du premier et du deuxième corps céramique (52, 52', 92, 92').

12. Séparateur de condensat selon au moins l'une quelconque des revendications précédentes,
**caractérisé en ce que** le dispositif d'entraînement (16, 16', 16", 94) présente au moins un, de préférence deux, moyens d'entraînement (30, 30') destinés à déplacer un des corps céramiques (12, 12', 42, 42', 52, 52', 92, 92'), dans lequel un moyen d'entraînement ou les deux moyens d'entraînement (30, 30') est/sont conçu(s) pour déplacer de préférence le deuxième corps céramique (12', 42', 52') en fonction d'une grandeur physique variant à l'intérieur du boîtier de séparateur de condensat (2, 2', 2'') ou grandeur de mesure détectée.

13. Séparateur de condensat selon au moins l'une quelconque des revendications précédentes,
**caractérisé en ce qu'**au moins deux moyens d'entraînement (30, 30') destinés à déplacer de préférence le deuxième corps céramique (12', 42', 52') sont prévus, dans lequel les moyens d'entraînement (30, 30') agissent sur le corps céramique (12', 42', 52') de préférence dans des directions d'action différentes, de préférence dans des directions d'action s'étendant de manière angulaire les unes par rapport aux autres, de préférence selon un angle dans la plage d'environ 70° à environ 110°, et/ou dans lequel de préférence le premier moyen d'entraînement (30) déplace le corps céramique dans une première plage de températures ΔT et le deuxième moyen d'entraînement (30') déplace le corps céramique dans une deuxième plage de températures ΔT, dans lequel la première et la deuxième plage de températures présentent des écarts différents par rapport à la courbe d'ébullition.

14. Séparateur de condensat selon au moins l'une quelconque des revendications précédentes,
**caractérisé par** au moins un dispositif de mesure de température destiné à relever la température de fluide à l'intérieur du boîtier (2, 2', 2'') ou au voisinage du boîtier (2, 2', 2"), dans lequel le dispositif de mesure de température est couplé au dispositif d'entraînement (16, 16', 16", 94) avec transmission de signaux de façon directe ou par l'intermédiaire d'un dispositif de commande,
dans lequel le dispositif de mesure de température est réalisé de préférence en tant que thermomètre à résistance ou thermoélément.

15. Séparateur de condensat selon au moins l'une quelconque des revendications précédentes,
**caractérisé par** un dispositif de production d'énergie électrique destiné à produire de l'énergie électrique à partir d'énergie thermique contenue dans le fluide, qui est réalisé de préférence en tant qu'élément Peltier et conçu pour alimenter en énergie au moins le ou les moyens d'entraînement (30, 30') et/ou un dispositif de commande.

16. Procédé pour évacuer un condensat dans un séparateur de condensat, comprenant les étapes suivantes :
d'introduction d'un fluide dans un séparateur de condensat (1, 1', 1", 1''', 80, 80', 80"), qui présente un boîtier (2, 2', 2", 82), une entrée (6, 86) et une sortie (8, 88) et une soupape (10, 10', 10", 90),
de déplacement d'un corps céramique (12', 42', 52', 92') par rapport à un autre corps céramique (12, 42, 52, 92) en contact avec le corps céramique (12', 42', 52', 92'), de sorte qu'une section d'écoulement pour le fluide soit modifiée,
dans le cas de la section d'écoulement libre, d'évacuation du fluide du boîtier (2, 2', 2", 82) par la sortie (8, 88),
dans lequel le déplacement d'un des corps céramiques (12', 42', 52', 92') par rapport à l'autre corps céramique (12, 42, 52, 92) est réalisé en fonction de la pression du fluide dans le séparateur de condensat (80, 80', 80") ou dans un espace relié au séparateur de condensat, afin de déplacer le deuxième corps céramique (92') par rapport au premier corps céramique (92),
dans lequel la pression de fluide est introduite par l'intermédiaire d'une conduite de fluide dans le séparateur de condensat (80, 80', 80") ou l'espace sur une surface de pression (104, 104') sur le deuxième corps céramique (92') pour déplacer le deuxième corps céramique (92') par rapport au premier corps céramique (92) ;
dans lequel le déplacement d'un des corps céramiques (12', 42', 52', 92') par rapport à l'autre corps céramique (12, 42, 52, 92) comprend de préférence en outre l'étape suivante :
de glissement de surfaces de contact (24, 24') planes des corps céramiques (12, 12', 42, 42') l'une sur l'autre ou de surfaces de contact cylindriques des corps céramiques (52, 52', 92, 92') l'une dans l'autre.
